# EUROPÄISCHE PATENTSCHRIFT

(11) **EP 3 433 827 B1**
(45) Veröffentlichungstag und Bekanntmachung des Hinweises auf die Patenterteilung: **06.01.2021**
(21) Anmeldenummer: 17713611.6
(22) Anmeldetag: 23.03.2017
(51) Int. Cl.: G06Q 50/06, H02J 3/14

(54) **VERFAHREN ZUM STEUERN EINER MULTIVALENTEN ENERGIEVERSORGUNGSANLAGE**
METHOD FOR CONTROLLING A MULTIVALENT POWER SUPPLY SYSTEM
PROCÉDÉ DE COMMANDE D'UNE INSTALLATION DE DISTRIBUTION D'ÉNERGIE MULTIVALENTE

(30) Priorität: 24.03.2016 DE 102016205028
(43) Veröffentlichungstag der Anmeldung: 30.01.2019
(73) Patentinhaber: Viessmann Werke GmbH & Co. KG, 35108 Allendorf (DE)
(72) Erfinder: ARNOLD, Christian, 36119 Neuhof-Rommerz (DE); BOCK, Martin, 35110 Frankenau (DE); GRAD, Andrej, 35088 Battenberg (DE); MAURER, Tobias, 35108 Allendorf (DE); OSTERLOH, Reinhard, 59955 Winterberg (DE); TIMMERMANN, Jörg, 35088 Battenberg (DE)
(74) Vertreter: MERH-IP Matias Erny Reichl Hoffmann Patentanwälte PartG mbB
(86) Internationale Anmeldenummer: PCT/EP2017/056928
(87) Internationale Veröffentlichungsnummer: WO 2017/162794

(56) Entgegenhaltungen:
- EP-A2- 1 202 425
- US-A1- 2011 071 690
- US-A1- 2013 140 885

## Beschreibung

Die vorliegende Erfindung betrifft ein Verfahren zum Steuern einer multivalenten Energieversorgungsanlage mit mindestens zwei Energieerzeugern, die mindestens zwei verschiedene Energieträger nutzen, um Energie in Form von Wärme und/oder Kälte und/oder elektrischer Energie bereitzustellen. Die Erfindung betrifft ferner eine Steuereinrichtung zum Steuern einer multivalenten Energieversorgungsanlage.

Ein Verfahren zum Betreiben eines Systems mit mehreren Wärmeerzeugungseinrichtungen ist beispielsweise aus der EP 2187136 A2 bekannt. Das System kann Wärmeleistung unter Verwendung mehrerer Wärmeerzeugungseinrichtungen bereitstellen, wobei die Verteilung der Wärmeleistung auf die einzelnen Wärmeerzeugungseinrichtungen variabel ist, so dass diese nahe an ihrem optimalen Wirkungsgrad betrieben werden können. Die Zuteilung der Leistung kann nicht nur über ein übergeordnetes Kesselmanagementsystem erfolgen, sondern auch durch Abstimmung der einzelnen Wärmeerzeugungseinrichtungen untereinander erfolgen.

Aus der internationalen Patentanmeldung WO 2009/141176 A1 ist ein mobiles Heizsystem bekannt, das eine Mehrzahl von brennstoffbetriebenen Heizgeräten aufweist, die über ein Bussystem miteinander in Kommunikationsverbindung stehen. Das Heizsystem ist derart eingerichtet, dass sich beim Starten des Heizsystems, basierend auf vorbestimmten Regeln, eines der Heizgeräte als Master bezüglich der Ansteuerung von weiteren, an das Bussystem angeschlossenen Heizgeräten konfiguriert. Die verbleibenden Heizgeräte werden als Slaves konfiguriert.

Die europäische Patentanmeldung EP 2144130 A1 offenbart ein Gruppenverwaltungssystem, das eine Vielzahl von Vorrichtungen kollektiv steuern kann und ein flexibles Hinzufügen oder Ändern von Vorrichtungsgruppen erlaubt.

Ein hybrides Heizsystem bestehend aus mindestens einem Brennwertkessel und mindestens einem Nicht-Brennwertkessel ist aus der internationalen Patentanmeldung WO 2008/091970 A2 bekannt. Das Ein- beziehungsweise Ausschalten der einzelnen Kessel durch eine Steuerung erfolgt nach Bestimmung der Heizlast unter anderem auf Basis des Flusses in der Hauptleitung des Heizsystems sowie weiterer Startkriterien. Die Auswahl der Kessel erfolgt ferner in Abhängigkeit der Außentemperatur sowie der Betriebsstunden der einzelnen Kessel.

Die US-Patentanmeldung US 2013/0140885 A1 befasst sich mit der Steuerung einer Vielzahl von Energielasten und Energieerzeugern, um eine Energiebereitstellungsanforderung zu erfüllen. Die Lasten und Erzeuger können einzelnen Fahrzeugen, Gebäuden, Gebäudekomplexen oder anderen physikalischen Objekten zugeordnet sein. Die Energieerzeuger können eine Vielzahl verschiedener Betriebszustände einnehmen.

Die europäische Patentanmeldung EP 1202425 A2 offenbart ein System zum Planen einer Energieversorgung sowie zum koordinierten Verwalten der Energiezufuhr an Energieverbraucher. Energieerzeuger können Kraftwerke, insbesondere Großkraftwerke wie zum Beispiel Kernkraftwerke, Wasserkraftwerke und Solarkraftwerke sein.

Die US-Patentanmeldung US 2011/0071690 A1 offenbart Verfahren zum Verwalten eines Energieversorgungsnetzes im Zusammenhang mit Großkraftwerken.

Der vorliegenden Erfindung liegt die Aufgabe zugrunde, ein Verfahren zum Steuern einer multivalenten Energieversorgungsanlage anzugeben, womit eine im Vergleich zum Stand der Technik verbesserte Ausnutzung von gegenwärtig verfügbaren Energieressourcen erzielt werden kann. Insbesondere soll ein Verfahren zum Steuern einer multivalenten Energieversorgungsanlage bereitgestellt werden, welches spezifische Eigenschaften von Energieerzeugern in der Energieversorgungsanlage berücksichtigt, die sich aus der Verwendung unterschiedlicher Energieträger ergeben.

Die Lösung der Aufgabe gelingt durch ein Verfahren zum Steuern einer multivalenten Energieversorgungsanlage, die mindestens zwei Energieerzeuger umfasst, welche mindestens zwei verschiedene Energieträger nutzen, um Energie in Form von Wärme und/oder Kälte und/oder elektrischer Energie bereitzustellen. Ferner umfasst die Energieversorgungsanlage für jeden Energieerzeuger eine Regeleinrichtung zum Regeln von Regelgrößen des Energieerzeugers. Die Energieversorgungsanlage umfasst außerdem eine Steuereinrichtung zum koordinierten Steuern der Regeleinrichtungen.

Die Steuereinrichtung erfasst mindestens eine Energiebereitstellungsanforderung für jeweils mindestens eine Energieform Wärme und/oder Kälte und/oder elektrische Energie. Für jeden Energieerzeuger ermittelt die Steuereinrichtung Sollwerte zum Erfüllen der mindestens einen Energiebereitstellungsanforderung, wobei die Sollwerte auch Anweisungen zum Einschalten oder Ausschalten des Energieerzeugers umfassen können, und gibt die Sollwerte an die Regeleinrichtungen aus. Erfindungsgemäß werden die Sollwerte in Abhängigkeit des jeweils genutzten Energieträgers ermittelt.

Im Sinne der Erfindung ist ein Energieerzeuger "eingeschaltet", wenn die von dem Energieerzeuger bereitgestellte Leistung einen vorgegebenen Leistungs-Schwellenwert überschreitet. Zum "Einschalten" eines Energieerzeugers wird also die von dem Energieerzeuger bereitgestellte Leistung so weit erhöht, bis die von dem Energieerzeuger bereitgestellte Leistung größer ist als der vorgegebene Leistungs-Schwellenwert.

Im Sinne der Erfindung ist ein Energieerzeuger "ausgeschaltet", wenn die von dem Energieerzeuger bereitgestellte Leistung einen vorgegebenen Leistungs-Schwellenwert unterschreitet. Zum "Ausschalten" eines Energieerzeugers wird also die von dem Energieerzeuger bereitgestellte Leistung so weit abgesenkt, bis die von dem Energieerzeuger bereitgestellte Leistung kleiner ist als der vorgegebene Leistungs-Schwellenwert.

Koordiniertes Steuern der Regeleinrichtungen bedeutet, dass die Steuereinrichtung beim Bestimmen der Sollwerte die Gesamtheit der Energieerzeuger in der Energieversorgungsanlage berücksichtigt. Dies kann beinhalten, dass bei gleichzeitigem Vorliegen einer Vielzahl von Energiebereitstellungsanforderungen für verschiedene Energieformen zu berücksichtigen ist, welcher Energieerzeuger welche Energieform(en) bereitstellen kann. Ferner kann es nötig sein, dass die Steuereinrichtung bestimmt, ob mehrere Energieerzeuger erforderlich sind, um die Energiebereitstellungsanforderung(en) zu erfüllen. Beim Auswählen der Energieerzeuger zum Erfüllen der Energiebereitstellungsanforderung(en) kann die Steuereinrichtung zudem beachten, wie viel Zeit die unterschiedlichen Energieerzeuger benötigen, um einen bestimmten Sollwert zu erreichen und/oder ob Restriktionen bezüglich der Verfügbarkeit eines durch die Energieerzeuger genutzten Energieträgers vorliegen.

Um ein koordiniertes Steuern der Regeleinrichtungen zu ermöglichen kann die Steuereinrichtung dafür ausgelegt sein, eine Vielzahl von spezifischen Eigenschaften der Energieerzeuger zu erfassen und gegebenenfalls miteinander zu vergleichen und/oder Abhängigkeiten zwischen den Energieerzeugern zu erkennen und zu berücksichtigen. Insbesondere können spezifische Eigenschaften hinsichtlich der Leistungsabgabe der Energieerzeuger bei der Steuerung der Energieversorgungsanlage berücksichtigt werden. Spezifische Eigenschaften hinsichtlich der Leistungsabgabe umfassen unter anderem eine maximal durch den Energieerzeuger bereitstellbare Leistung und die Zeit, die der Energieerzeuger benötigt, um einen ausgeschalteten in einen optimalen Betriebszustand überzugehen.

Durch das erfindungsgemäße Verfahren kann eine multivalente Energieversorgungsanlage derart betrieben werde, dass spezifische Eigenschaften der Energieerzeuger in vorteilhafter Weise zum Erfüllen der mindestens einen Energiebereitstellungsanforderung koordiniert und kombiniert werden.

Die Lösung der Aufgabe gelingt außerdem durch eine Steuereinrichtung zum Steuern einer multivalenten Energieversorgungsanlage, wobei die multivalente Energieversorgungsanlage mindestens zwei Energieerzeuger umfasst, die in ihrer Summe mindestens zwei verschiedene Energieträger nutzen, um Energie in Form von Wärme und/oder Kälte und/oder elektrischer Energie bereitzustellen. Jeder der Energieerzeuger umfasst eine Regeleinrichtung zum Regeln von Regelgrößen des Energieerzeugers.

Erfindungsgemäß umfasst die Steuereinrichtung eine Anforderungserfassungseinrichtung zum Erfassen mindestens einer Energiebereitstellungsanforderung für jeweils mindestens eine Energieform Wärme und/oder Kälte und/oder elektrische Energie. Ferner umfasst die Steuereinrichtung eine Sollwertbestimmungseinrichtung zum Bestimmen von Sollwerten für jeden Energieerzeuger zum Erfüllen der mindestens einen Energiebereitstellungsanforderung in Abhängigkeit des jeweils genutzten Energieträgers, wobei die Sollwerte auch Anweisungen zum Einschalten oder Ausschalten des Energieerzeugers umfassen können. Die Steuereinrichtung umfasst außerdem eine Sollwertausgabeeinrichtung zum Ausgeben der Sollwerte an die Regeleinrichtungen.

Das Steuern von multivalenten Energieversorgungsanlagen kann sehr komplex sein und erfordert in der Regel eine auf die konkrete Anlagenkonfiguration angepasste, maßgeschneiderte Lösung, wie zum Beispiel eine Speicherprogrammierbare Steuerung. Der Entwicklungsaufwand und die damit verbundenen Kosten zum Bereitstellen einer Anlagensteuerung können je nach Komplexität der Energieversorgungsanlage sehr hoch ausfallen. Außerdem kann bei der Installation einer Energieversorgungsanlage die Konfiguration einer entsprechenden Steuerungsehr kompliziert und zeitintensiv sein. Ziel der Erfindung ist es daher, Verfahren bereitzustellen, die es erlauben eine Vielzahl verschiedener multivalenter Energieversorgungsanlagen mit unterschiedlichen Infrastrukturen und Komponenten optimal zu steuern. Außerdem soll eine Steuereinrichtung bereitgestellt werden, die eine Vielzahl verschiedener multivalenter Energieversorgungsanlagen optimal steuern kann.

Die erfindungsgemäße Steuereinrichtung kann dafür ausgelegt sein, die erfindungsgemäßen Verfahren zum Steuern einer multivalenten Energieversorgungsanlage ausführen. Insbesondere kann die Steuereinrichtung eine Vielzahl unterschiedlicher Anlagenkonfigurationen steuern, ohne für jede neue oder geänderte Anlagenkonfiguration neu programmiert oder konfiguriert zu werden.

Eine multivalente Energieversorgungsanlage ist eine Energieversorgungsanlage, die in Summe mehr als einen Energieträger als Energiequelle verwendet. Sie weist mindestens zwei Energieerzeuger auf, die jeweils eine nutzbare Energieform, wie zum Beispiel Wärme, Kälte, mechanische Energie und/oder elektrische Energie, beispielsweise elektrischen Strom oder elektrische Spannung, bereitstellen. Wärme kann beispielsweise für eine Warmwasserversorgung und/oder eine Heizungsanlage und/oder als Prozesswärme, beispielsweise für industrielle Anwendungen bereitgestellt werden. Zum Transportieren der Wärme wird üblicherweise ein fluides Trägermedium, also ein Gas oder eine Flüssigkeit verwendet, beispielweise Wasser oder Wasserdampf.

Um eine multivalente Energieversorgungsanlage optimal zu betreiben, muss die Steuerung der Energieversorgungsanlage in Abhängigkeit der spezifischen Eigenschaften der Energieerzeuger, die unter anderem von der Art des genutzten Energieträgers abhängen, erfolgen. Die vorliegende Erfindung zielt darauf ab, diese spezifischen Eigenschaften in synergetischer Weise miteinander zu kombinieren. In anderen Worten ausgedrückt erlaubt es das erfindungsgemäße Verfahren, die jeweiligen Vorteile der verschiedenen Energieträger, insbesondere in Hinblick auf deren Verfügbarkeit und/oder Energiegehalt, miteinander zu kombinieren. Dies gelingt durch eine koordinierte Steuerung der Energieerzeuger, so dass aus der Multivalenz der Energieversorgungsanlage, also der Nutzung unterschiedlicher Energieträger, ein Vorteil gegenüber monovalenten Energieversorgungsanlagen, die nur einen Energieträger nutzen, erzielt werden kann.

Insbesondere kann eine multivalente Energieversorgungsanlage eine Kombination aus regenerativen und fossilen Energieträgern verwenden, so dass ein besonders zuverlässiger Betrieb der Energieversorgungsanlage erreicht werden kann, da eine schwankende Verfügbarkeit eines Energieträgers durch die Verwendung mindestens eines weiteren Energieträgers ausgeglichen werden kann. Hierdurch erlaubt es das erfindungsgemäße Verfahren, dass die Steuerung der Energieversorgungsanlage auf Bedingungen reagieren kann, die sich zeitlich ändern.

Die mindestens zwei Energieerzeuger der multivalenten Energieversorgungsanlage nutzen in Summe mindestens zwei verschiedene Energieträger. Als Energieträger können fossile und/oder regenerative Energieträger zum Einsatz kommen. Beispielsweise können zwei oder mehr aus der folgenden Liste verwendet werden: Kohle, Erdgas, Heizöl, Diesel, Benzin, Wasserstoff, Biogas, Holz (zum Beispiel in Form von Pellets und/oder Hackschnitzeln) oder andere Arten von Biomasse, geothermische Energie, Sonnenstrahlung, Wind, elektrische Energie (zum Beispiel elektrischer Strom und/oder elektrische Spannung), Fernwärme, mechanische Energie (zum Beispiel Wasserkraft). Durch die Verwendung verschiedener Energieträger kann die Zuverlässigkeit der Energieversorgung verbessert werden, da eine Abhängigkeit von der Verfügbarkeit eines Energieträgers (wie zum Beispiel Sonne und/oder Wind) verringert werden kann.

Die multivalente Energieversorgungsanlage gemäß der Erfindung weist mindestens zwei Energieerzeuger auf, die jeweils mindestens einen der zuvor genannten Energieträger nutzen, um Energie in Form von Wärme, Kälte und/oder elektrischer Energie bereitzustellen, beispielsweise zwei oder mehr aus der folgenden Liste, die eine nicht abschließende Aufzählung ist: Ölheizkessel, Gasheizkessel, Brennwertkessel, Gasmotor, Gasturbine, Blockheizkraftwerk (BHKW), Holzkessel, (elektrische) Wärmepumpe, Photovoltaikanlage, Windturbine, thermischer Sonnenkollektor, Brennstoffzelle. Außerdem kann eine Wärme-Kraft-Kopplung, beispielsweise mit einem Stirlingmotor implementiert sein. Ferner kann auch ein Pufferspeicher als Energieerzeuger betrachtet werden.

Die verschiedenen Energieerzeuger können sehr unterschiedliche spezifische Eigenschaften aufweisen und dementsprechend unterschiedliche oder sogar gegensätzliche Anforderungen bei deren Betrieb in einer multivalenten Energieversorgungsanlage stellen. Im Folgenden werden typische spezifische Eigenschaften einiger ausgewählter Energieerzeuger bespielhaft beschrieben.

Ein Ölheizkessel beziehungsweise Gasheizkessel nutzt die fossilen Energiequellen Heizöl beziehungsweise Erdgas und liefert Wärme, die üblicherweise auf ein fluides Trägermedium, meistens Wasser, übertragen wird. Er kann innerhalb kurzer Zeit hohe Leistungen liefern und auch schnell ausgeschaltet werden. Ein solcher Heizkessel kann besonders gut regelbar sein. Ferner kann er eine besonders hohe Regeldynamik aufweisen und daher im modulierenden Betrieb verwendet werden. Ein Heizkessel erlaubt zudem häufiges Ein- und Ausschalten und kann daher auch zweistufig im Ein-/Ausschaltbetrieb eingesetzt werden. Ölheizkessel und Gasheizkessel sind somit in ihrem Betrieb besonders flexibel einsetzbar und werden häufig als sogenannte Spitzenlastkessel verwendet, die schnell auf Schwankungen von Energiebereitstellungsanforderungen reagieren sollen. Die Energiegesamtkosten, welche die Kosten des Energieträgers selbst sowie die Kosten der Wartung und die Investitionskosten für den Heizkessel berücksichtigen, bewegen sich im Vergleich mit anderen Energieerzeugern auf mittlerem Niveau. Ölheizkessel und Gasheizkessel können jeweils als Brennwertkessel oder Heizwertkessel ausgeführt sein.

Ein Blockheizkraftwerk (BHKW) nutzt üblicherweise fossile Energiequellen, könnte aber auch mit Biogas oder Wasserstoff, der aus regenerativen Quellen stammt, betrieben werden. Es liefert Wärme und elektrische Energie (zum Beispiel Strom und/oder Spannung), ist gut regelbar und kann schnell auf hohe Leistungen hochgefahren und auch schnell wieder runtergefahren werden. Im Unterschied zum Heizkessel soll das BHKW aber nicht häufig ein- beziehungsweise ausgeschaltet werden. Um ein BHKW wirtschaftlich zu betreiben wird ist es in der Regel im Dauerbetrieb eingesetzt. Trotz hoher Investitionskosten kommt das BHKW insgesamt somit auf relativ niedrige Energiegesamtkosten.

Ein Holzkessel nutzt festen Brennstoff aus einer nachwachsenden Energiequelle (Holz, zum Beispiel in Form von Pellets oder Hackschnitzel) und liefert Wärme. Er ist nur mäßig regelbar und kann nur relativ langsam auf hohe Leistungen hochgefahren beziehungsweise wieder runtergefahren werden. Aufgrund der langen Schaltzeiten soll ein Holzkessel nicht häufig einbeziehungsweise ausgeschaltet werden. Beim Ausschalten muss schon aus Sicherheitsgründen üblicherweise abgewartet werden, bis der bereits in der Brennkammer befindliche Brennstoff vollständig verbrannt ist. Beim Einschalten muss hingegen zunächst ausreichend Brennstoff in die Brennkammer transportiert und entzündet werden. Er verursacht relativ niedrige Energiegesamtkosten. Daher wird er meist als Grundlastkessel verwendet, der möglichst kontinuierlich in Betrieb ist und eine Mindestenergieanforderung einer Energieversorgungsanlage erfüllen kann.

Um auf Schwankungen in der angeforderten Energiemenge reagieren zu können, wird ein Holzkessel meist in Kombination mit einem Pufferspeicher verwendet, der die vom Holzkessel bereitgestellte Wärme zwischenspeichert, wenn die von den Verbrauchern geforderte Wärmemenge kleiner als die vom Holzkessel bereitgestellte Wärmemenge ist. Ist die von den Verbrauchern geforderte Wärmemenge größer als die vom Holzkessel bereitgestellte Wärmemenge, kann zunächst die gespeicherte Wärmemenge vom Pufferspeicher wieder abgegeben werden. Alternativ oder zusätzlich zum Pufferspeicher wird häufig ein Gasheizkessel zusammen mit Holzkesseln in einer Energieversorgungsanlage verwendet. Der Gasheizkessel wird dann eingeschaltet, wenn die geforderte Wärmemenge die vom Holzkessel und vom Pufferspeicher verfügbare Wärmemenge überschreitet. Der Gasheizkessel wird also als Spitzenlastkessel benutzt. Meist werden Holzkessel paarweise betrieben, damit stets mindestens einer der beiden Holzkessel betriebsbereit ist.

Eine elektrische Wärmepumpe verbraucht elektrische Energie und nutzt daher, je nachdem aus welcher Quelle die elektrische Energie gewonnen wurde, fossile und/oder regenerative Energiequellen. Sie kann Wärme und/oder Kälte liefern, hat jedoch einen eingeschränkten Temperaturbereich. Üblicherweise kann eine Wärmepumpe eine maximale Vorlauftemperatur von 60°C bereitstellen. Sie ist gut regelbar und kann schnell auf hohe Leistungen hochgefahren und auch schnell wieder runtergefahren werden. Allerdings darf sie nicht häufig ein- beziehungsweise ausgeschaltet werden. Sie verursacht relativ niedrige Energiegesamtkosten.

Eine weitere Komponente, die in vielen multivalenten Energieversorgungsanlagen verwendet wird ist ein Pufferspeicher. Der Pufferspeicher kann von Energieerzeugern bereitgestellte Energie zeitlich Zwischenspeichern. Je nach Energieform kann ein Pufferspeicher zum Beispiel ein Speicher für elektrische Energie, beispielsweise in Form von Akkus oder Kondensatoren, oder ein Wärmespeicher und/oder Kältespeicher, beispielsweise in Form eines isolierten Wassertanks, sein. Außerdem kann Energie auch in Form von mechanischer Energie gespeichert werden, zum Beispiel in einem Schwungrad. Ein Pufferspeicher erlaubt das zumindest teilweise Entkoppeln des Betriebs der Energieerzeuger von den Energieverbrauchern. Hierdurch kann der Wirkungsgrad einer multivalenten Energieversorgungsanlage verbessert werden.

Erfindungsgemäß kann die multivalente Energieversorgungsanlage dafür ausgelegt sein, Energie in Form von Wärme, Kälte und/oder elektrischer Energie bereitzustellen. Für jede Energieform kann mindestens eine Energiebereitstellungsanforderung vorliegen. Anforderungen für jede Energieform können unabhängig voneinander durch die Steuerungseinrichtung erfasst werden und in entsprechende Forderungen an Energieerzeuger weiterverarbeitet werden. Eine Energiebereitstellungsanforderung kann beispielsweise von einem Verbraucher, einer Vielzahl von Verbrauchern oder einer externen oder internen Vorrichtung kommen, die Anforderungen einer Vielzahl von Verbrauchern koordiniert.

Vorzugsweise kann die Steuereinrichtung eine Anforderungserzeugungseinrichtung aufweisen, die dafür ausgelegt ist mindestens eine Energiebereitstellungsanforderung für jeweils mindestens eine Energieform Wärme und/oder Kälte und/oder elektrische Energie zu erzeugen.

Da es in der multivalenten Energieversorgungsanlage Energieerzeuger geben kann, die gleichzeitig mehr als eine Energieform bereitstellen können, kann es nötig sein, festzulegen, unter welchen Voraussetzungen solche Energieerzeuger ein- beziehungsweise ausgeschaltet und/oder geregelt oder gesteuert werden sollen. Die Steuereinrichtung kann bei der Steuerung der Energieerzeuger bestimmte Energieformen priorisieren, so dass eine Energiebereitstellungsanforderung für eine erste Energieform gegenüber einer Energiebereitstellungsanforderung einer zweiten Energieform bevorzugt behandelt wird. Die Steuereinrichtung kann auch eine Prioritäts-Reihenfolge für die Energieformen festlegen oder erfassen. Die Prioritäts-Reihenfolge kann beispielsweise manuell von einem Benutzer festgelegt werden. Die Steuereinrichtung kann Energiebereitstellungsanforderungen in Abhängigkeit der Prioritäts-Reihenfolge verarbeiten.

Beispielsweise liefert ein BHKW sowohl Wärme als auch elektrische Energie (beispielsweise Strom und/oder Spannung). Folglich können für ein BHKW zwei unterschiedliche Forderungen aus den beiden Energieformen vorliegen. Da die vom BHKW bereitgestellte elektrische Energie aber bei Nichtvorliegen einer entsprechenden Forderung der durch die multivalente Energieversorgungsanlage versorgten Verbraucher jederzeit in ein öffentliches Stromnetz eingespeist werden kann, wird das BHKW üblicherweise im Dauerbetrieb eingesetzt.

Die Energieform Wärme umfasst alle Energieerzeuger, die Wärmeenergie bereitstellen können. Zudem berücksichtigt die Steuereinheit für die Energieform Wärme Bedingungen zum Einschalten und/oder Ausschalten, die einen Bezug zu einer Energiebereitstellungsanforderung von Wärme haben, zum Beispiel eine geforderte Anlagenvorlauftemperatur und/oder eine Puffertemperatur. In ähnlicher Weise werden Energieerzeuger den Energieformen elektrische Energie und Kälte zugeordnet.

Insbesondere kann ein Energieerzeuger mehr als eine Form von Energie bereitstellen und somit auch mehr als einer Energieform zugeordnet sein. Liegen Energiebereitstellungsanforderungen für mehr als eine Energieform vor, die denselben Energieerzeuger betreffen könne, so entscheidet die Steuereinrichtung, welche Anforderung für den jeweiligen Energieerzeuger Priorität behandelt werden soll. Hiermit kann vermieden werden, dass eine Anforderung aus einer Energieform dazu führt, dass ein Energieerzeuger ausgeschaltet wird, obwohl eine andere Energieform eine Anforderung zum Betreiben des Energieerzeugers generiert.

Jeder Energieerzeuger in der Energieversorgungsanlage weist eine Regeleinrichtung zum Regeln von Regelgrößen des Energieerzeugers auf. Regelgrößen eines Energieerzeugers umfassen beispielsweise eine Kesseltemperatur des Energieerzeugers, einen Volumen- und/oder Massenstrom eines Trägermediums durch den Energieerzeuger, eine Temperatur des Trägermediums am Vorlauf und/oder am Rücklauf des Energieerzeugers, eine Leistungsaufnahme des Energieerzeugers und/oder eine Leistungsabgabe des Energieerzeugers. Bei einem Energieerzeuger, der elektrische Energie bereitstellt, können die Regelgrößen einen elektrischen Strom, eine elektrische Leistung und/oder eine elektrische Spannung betreffen.

Die Regeleinrichtungen werden von einer Steuereinrichtung koordiniert, die den Regeleinrichtungen übergeordnet ist. Die Steuereinrichtung ist dafür ausgelegt, eine Energiebereitstellungsanforderung für Energie in Form von Wärme und/oder Kälte und/oder elektrische Energie zu erfassen. Eine Energiebereitstellungsanforderung kann beispielsweise eine Anforderung nach einer bestimmten Vorlauftemperatur oder eine bestimmte Temperatur in einem Pufferspeicher, insbesondere in einem bestimmten Bereich des Pufferspeichers, sein oder eine elektrische Leistung sein. Die Energiebereitstellungsanforderung kann beispielsweise von einem Verbraucher oder einem Verbund von Verbrauchern erzeugt werden und über eine geeignete Datenkommunikationsverbindung an die Steuereinrichtung ausgegeben werden.

Die Steuereinrichtung ist ferner dafür ausgelegt, für jeden Energieerzeuger Sollwerte zum Erfüllen der mindestens einen Energiebereitstellungsanforderung in Abhängigkeit des jeweils genutzten Energieträgers zu bestimmen, wobei die Sollwerte auch Anweisungen zum Einschalten oder Ausschalten eines Energieerzeugers umfassen.

Die Steuereinrichtung ist ferner dafür ausgelegt, die Sollwerte an die Regeleinrichtungen auszugeben. Zum Kommunizieren mit den Regeleinrichtungen nutzt die Steuereinrichtung eine geeignete Datenkommunikationsverbindung.

Die verschiedenen in der Energieversorgungsanlage genutzten Energieträger können beispielsweise aufgrund unterschiedlicher Kosten und/oder schwankender Verfügbarkeit Anforderungen an die Energieversorgungsanlage stellen. Um einen möglichst ununterbrochenen Betrieb der Energieversorgungsanlage sicherzustellen ermittelt die Steuereinrichtung die Sollwerte für die Energieerzeuger zum Beispiel in Abhängigkeit der aktuellen und/oder auch einer für die Zukunft berechneten, vorgegebenen oder geschätzten Verfügbarkeit der genutzten Energieträger.

Beispielsweise kann die Steuereinrichtung dafür ausgelegt sein, bevorzugte Energieerzeuger, die zum Beispiel besonders kostengünstige und/oder regenerative Energieträger nutzen, mit hoher beziehungsweise maximaler Leistung zu betreiben. Nicht bevorzugte Energieerzeuger, die zum Beispiel weniger kostengünstige und/oder fossile Energieträger nutzen und zur Abdeckung der Lastspitzen vorgesehen sind, sollen nicht zum Speichern von Wärme in einem Pufferspeicher eingesetzt werden. Bevorzugte Energieerzeuger dürfen den Pufferspeicher nutzen, um höhere Laufzeiten beziehungsweise weniger Schaltvorgänge zu realisieren.

Die erfindungsgemäße Steuereinrichtung einer multivalenten Energieversorgungsanlage kann den Regeleinrichtungen der Energieerzeuger Sollwerte vorgeben und/oder Schaltforderungen erteilen. Neben den Schaltforderungen, die festlegen, ob ein Energieerzeuger an- oder ausgeschaltet sein muss, kann die Steuereinrichtung aber auch Freigaben erteilen, die ein Einschalten oder Ausschalten eines Energieerzeugers erlauben, aber nicht erzwingen.

Alleine das gezielte Ein- und Ausschalten von Energieerzeugern durch die Steuereinrichtung wäre nicht ausreichend, um die Energiebereitstellungsanforderung zu erfüllen, denn durch das Schalten alleine wird nicht definiert, mit welchem Modulationsgrad bei welchem Temperaturniveau der freigegebene Energieerzeuger arbeiten soll. Hieraus folgt, dass Sollwertvorgaben durch die Steuereinrichtung erforderlich sind.

Die unterschiedlichen Regelgrößen einer Energieversorgungsanlage (zum Beispiel Anlagenvorlauftemperatur, Puffertemperatur), erfordern, dass individuelle Sollwertvorgaben an die einzelnen Energieerzeuger nötig sind. Daneben sollen auch Randbedingungen berücksichtigt werden. Diese Randbedingungen können zum Beispiel Regelstrategien, festgelegte bevorzugte Energieerzeuger und/oder eine Pufferdynamik umfassen.

Das gezielte Freigeben von Energieerzeugern ist nicht ausreichend, um beispielsweise eine Anlagenvorlauftemperatur und/oder eine Puffertemperatur auf ein gewünschtes Niveau mit einer erforderlichen Leistung zu regeln. Denn durch die Freigabe wird nicht definiert, welche Leistung bei welchem Temperaturniveau der jeweils freigegebene Energieerzeuger liefern soll. Daher sind zusätzliche Sollwertvorgaben erforderlich.

In einer multivalenten Energieversorgungsanlage können unterschiedliche Energieerzeuger mit individuellen erzeugerspezifischen Restriktionen (zum Beispiel Minimal- und Maximalwerte der Leistung, des Volumenstroms oder der Laufzeiten) vertreten sein. Zusätzlich erlauben die umfangreichen Konfigurationsmöglichkeiten, dass Energieerzeuger auf jeweils unterschiedliche Regelgrößen (zum Beispiel Anlagenvorlauftemperatur, Pufferladezustand) arbeiten. Diese Umstände erfordern, dass jeder Energieerzeuger neben der Freigabe zum Einschalten oder Schaltforderung individuelle Sollwerte erhält.

Vorzugsweise weist jede Regeleinrichtung eines jeden Energieerzeugers eine Schnittstelle auf, um Sollwerte von der Steuereinrichtung zu empfangen. Die Regeleinrichtungen wirken über geeignete Aktoren auf die Energieerzeuger ein, um die Regelgrößen auf den entsprechenden Sollwert zu regeln. Die Regelgrößen umfassen beispielsweise: eine (elektrische oder Wärme- oder Kühl-) Leistung, die der Energieerzeuger in die Energieversorgungsanlage einbringt, einen Volumen- oder Massenstrom (oder elektrischer Strom) vom Energieerzeuger in die Energieversorgungsanlage, eine Energieerzeugervorlauftemperatur (eine elektrische Spannung).

Die Steuereinrichtung kann nicht direkt auf Regelgrößen einwirken sondern gibt lediglich Sollwerte an eine Regeleinrichtung aus. Das Regeln der Regelgrößen auf die Sollwerte bleibt im Verantwortungsbereich der Regeleinrichtungen. Die Steuereinrichtung kann einer Regeleinrichtung anstatt eines festen Sollwerts auch einen Arbeitsbereich (jeweils durch eine obere und untere Restriktion beziehungsweise einen Schwellenwert) vorgeben, in dem die Regelgrößen von der Regeleinrichtung eingestellt werden können. Ein von der Steuereinrichtung festgelegter Arbeitsbereich kann dementsprechend durch einen oder mehrere Sollwerte definiert werden, welche Minimal- und/oder Maximalwerte für die Regelgrößen festlegen. Dazu zählen zum Beispiel:

Eine maximale thermische oder elektrische Leistung (beziehungsweise Wärmeleistung, Kälteleistung) des Energieerzeugers, die nicht überschritten werden darf. Die Forderung erfolgt zum Beispiel in Prozent in Relation zur physikalisch möglichen Maximalleistung des betreffenden Energieerzeugers.

Eine minimale thermische oder elektrische Leistung (beziehungsweise Wärmeleistung, Kälteleistung) des Energieerzeugers, die nicht unterschritten werden darf. Die Forderung erfolgt zum Beispiel in Prozent in Relation zur physikalisch möglichen Maximalleistung des betreffenden Energieerzeugers.

Ein maximaler Volumenstrom (oder Massenstrom oder elektrischer Strom) des Energieerzeugers, der vom beziehungsweise durch den Energieerzeuger in die Energieversorgungsanlage fließt. Die Forderung erfolgt zum Beispiel in Prozent in Relation zum physikalisch möglichen maximalen Strom des betreffenden Energieerzeugers.

Ein minimaler Volumenstrom (oder Massenstrom oder elektrischer Strom) des Energieerzeugers, der vom beziehungsweise durch den Energieerzeuger in die Energieversorgungsanlage fließt. Die Forderung erfolgt zum Beispiel in Prozent in Relation zum physikalisch möglichen maximalen Strom des betreffenden Energieerzeugers.

Eine minimale und/oder maximale Energieerzeugervorlaufsolltemperatur oder elektrische Spannung. Die Forderung erfolgt in Grad Celsius beziehungsweise Volt. Die konkreten Werte, die die Steuereinrichtung an die Regeleinrichtungen der Energieerzeuger sendet, werden im Folgenden auch als Sollwerte bezeichnet.

Vorteilhafte Aus- und Weiterbildungen, welche einzeln oder in Kombination miteinander eingesetzt werden können, sind Gegenstand der abhängigen Ansprüche.

Die Steuereinrichtung kann dafür ausgelegt sein, eine Betriebsart aus einer vorbestimmten Menge von Betriebsarten zu erfassen, die Mindestwerte und/oder Maximalwerte für die mindestens eine Energiebereitstellungsanforderung festlegen. Das Bestimmen der Sollwerte für jeden Energieerzeuger erfolgt dann in Abhängigkeit der erfassten Betriebsart.

Die Betriebsarten können beispielsweise jahreszeitabhängig oder wetterabhängig sein. So kann die Steuereinrichtung der Energieversorgungsanlage zum Beispiel dafür ausgelegt sein, die Außentemperatur zu bestimmen und bei Frost ein Einfrieren von Wasserleitungen zu verhindern, indem eine entsprechend berechnete Mindesttemperatur als Sollwert vorgegeben wird. In ähnlicher Weise kann bei sehr hohen Außentemperaturen eine Betriebsart der Energieversorgungsanlage eingestellt werden, bei der beispielsweise nur solche Energieerzeuger, die elektrische Energie und/oder Kälte bereitstellen, betrieben werden.

Ferner können Betriebsarten für Störungssituationen definiert werden, so dass bei Vorliegen einer Störung (zum Beispiel ein Wasserrohrbruch, ein elektrischer Kurzschluss oder sonstiges) ein Notbetrieb der Energieversorgungsanlage eingestellt wird. Bei einem Notbetrieb der Energieversorgungsanlage kann die Steuereinrichtung zum Beispiel dafür ausgelegt sein, allen Regeleinrichtungen eine Freigabe zu erteilen, so dass alle Energieerzeuger im Wesentlich autonom betrieben werden können und gegebenenfalls nur noch von den Regeleinrichtungen gesteuert werden.

In der Steuereinrichtung können für eine Vielzahl vorab festgelegter Betriebsarten eine Vielzahl von Schwellenwerten, Arbeitsbereichen, Minimalwerten und/oder Maximalwerten für Anlagenbetriebsparameter, beispielsweise Puffertemperaturen und/oder Vorlauftemperaturen, hinterlegt sein. Erfasst die Steuereinrichtung, dass eine der festgelegten Betriebsarten eingestellt werden soll, so erfolgt das Bestimmen der Sollwerte für die Energieerzeuger in Abhängigkeit der hinterlegten Schwellenwerte, Arbeitsbereiche, Minimalwerte und/oder Maximalwerte.

Die Steuereinrichtung kann ferner eine Reihenfolge des Einschaltens und/oder Ausschaltens der Energieerzeuger erfassen. Das Bestimmen der Sollwerte kann dann in Abhängigkeit der Reihenfolge erfolgen. Die Reihenfolge der Energieerzeuger kann beispielsweise in einem Speicher der Steuereinrichtung hinterlegt sein. Vorzugsweise kann die Reihenfolge durch die Steuereinrichtung in Abhängigkeit der zu regelnden Energieerzeuger festgelegt werden. Alternativ kann die Reihenfolge durch einen Benutzer bestimmt werden.

Eine Reihenfolge des Einschaltens und/oder Ausschaltens von Energieerzeugern kann in mehrere Kaskaden aufgeteilt sein, wobei jeder Kaskade eine oder mehrere Gruppe(n) von Energieerzeugern umfassen kann. Eine Kaskade ist eine den Gruppen übergeordnete Ebene der Einteilung der Energieerzeuger und legt jeweils eine sequenzielle Reihenfolge der in ihr enthaltenen Energieerzeuger beziehungsweise Gruppen von Energieerzeugern fest. Kaskaden sind unabhängig voneinander steuerbar. Somit können mehrere parallel ausführbare sequenzielle Reihenfolgen von Energieerzeugern definiert werden, wobei jeweils unterschiedliche Kriterien für das Einschalten und/oder Ausschalten festgelegt werden können.

In jeder Gruppe ist eine Sequenz von Energieerzeugern festgelegt, wobei die Sequenz in Abhängigkeit von Regelgrößen der Energieerzeuger variabel sein kann. So kann zum Beispiel ein Laufzeitausgleich zwischen mehreren Energieerzeugern einer Gruppe realisiert werden. Die Reihenfolge des Einschaltens und/oder Ausschaltens von Energieerzeugern innerhalb einer Kaskade kann in Abhängigkeit einer Reihenfolge der Gruppen und der Sequenzen innerhalb der Gruppen ermittelt werden.

Innerhalb jeder Kaskade kann autark entschieden werden, ob und nach welchen Kriterien Energieerzeuger entlang der Reihenfolge ein und/oder ausgeschaltet werden sollen. Dazu kann für jede Kaskade eine Vielzahl von Kriterien festgelegt sein, die zum Beispiel Schwellenwerte in Abhängigkeit von Energiebereitstellungsanforderungen definieren.

Die Kaskaden können von der Steuereinrichtung parallel ausgeführt werden. Hierdurch kann die Regelgüte im Vergleich zu Verfahren, bei denen nur eine lineare Sequenz von Energieerzeugern festgelegt wird, deutlich verbessert werden. Außerdem kann durch das parallele Ausführen von Kaskaden verhindert werden, dass die Schaltreihenfolge an einem Energieerzeuger hängen bleibt, bei dem der Schaltvorgang durch ein Kriterium mit höherer Priorität verhindert wird.

Bei einem bevorzugten Verfahren wird mindestens einer der Energieerzeuger zum Erfüllen einer Mindestenergieanforderung verwendet. Die Mindestenergieanforderung wird auch als Grundlast bezeichnet. Ein Energieerzeuger, der eine Grundlast bereitstellt, sollte dabei nicht-modulierend betrieben werden, um insbesondere eine sehr lange und/oder ununterbrochene Laufzeit erreichen. Dazu wird der Energieerzeuger vorzugsweise stets bei seiner höchstmöglichen Leistung betrieben, bei welcher der Energieerzeuger seinen maximale Wirkungsgrad erreicht. Der Energieerzeuger zum Erfüllen der Mindestenergieanforderung kann zum Beispiel anhand von der Verfügbarkeit des genutzten Energieträgers oder anhand der durch den Energieerzeuger bereitgestellten Energieform(en) ausgewählt werden. Typischerweise werden BHKWs und/oder Holzkessel zum Bereitstellen einer Grundlast verwendet. Zum Bereitstellen einer Mindestenergieanforderung von elektrischer Energie können ebenfalls BHKWs eingesetzt werden. Alternativ können Photovoltaikanlagen oder Windturbinen verwendet werden, bei denen die bereitgestellte Leistung jedoch wetterabhängig stark schwanken kann, so dass ein Pufferspeicher und/oder Leistung aus einem öffentlichen Stromnetz und/oder ein weiterer Energieerzeuger zum Ausgleichen der Schwankungen nötig sein kann.

Bei einem weiteren bevorzugten Verfahren wird mindestens ein Energieerzeuger zum Erfüllen einer Maximalenergieanforderung verwendet. Die Maximalenergieanforderung wird auch als Spitzenlast bezeichnet. Hierfür kann zum Beispiel ein besonders schnell regelbarer Energieerzeuger bestimmt werden. Bei einer Einteilung der Energieerzeuger in Kaskaden, kann der Energieerzeuger zum Erfüllen einer Maximalenergieanforderung in eine gesonderte autark und/oder parallel zu anderen Kaskaden regelbare Kaskade eingeordnet sein, so dass der Energieerzeuger unabhängig von Kriterien anderer Kaskaden jederzeit eingeschaltet werden kann, um eine Energiebereitstellungsanforderung zu erfüllen. Eine Spitzenlast ist beispielsweise eine Energiemenge die über eine Grundlast hinausgeht und üblicherweise nur vorübergehend angefordert wird.

Die Steuereinrichtung kann vorzugsweise von jeder der Regeleinrichtungen Restriktionen bezüglich der Regelgrößen des jeweiligen Energieerzeugers erfassen, wobei die Restriktionen Minimal- und/oder Maximalwerte einer durch den Energieerzeuger bereitgestellten Leistung betreffen und/oder angeben, ob der betreffende Energieerzeuger eingeschaltet oder ausgeschaltet sein muss. Die Restriktionen bezüglich der Regelgrößen werden dann von der Steuereinrichtung beim koordinierten Bestimmen der Sollwerte für alle Energieerzeuger berücksichtigt.

Diese Restriktionen können erzeugerspezifische Restriktionen sein. Als Restriktion können auch ein Minimalwert und/oder ein Maximalwert vorgegeben werden, die jeweils auch gleich groß sein können. Hierdurch kann für den Energieerzeuger ein Arbeitspunkt festgelegt werden, an dem der Energieerzeuger betrieben werden soll. Ein solcher Arbeitspunkt kann beispielsweise einen besonders hohen Wirkungsgrad des Energieerzeugers sicherstellen. Durch das Erfassen der Restriktionen kann erreicht werden, dass die Steuereinrichtung in koordinierter Weise beim Bestimmen der Sollwerte zum Erfüllen der Energiebereitstellungsanforderungen auf Vorgaben der Energieerzeuger Rücksicht nimmt. Insbesondere kann vermieden werden, dass die Steuereinrichtung einen Sollwert für einen Energieerzeuger bestimmt, der aufgrund erzeugerspezifischer Restriktionen diesen Sollwert nicht erfüllen kann.

Außerdem kann die Steuereinrichtung dafür ausgelegt sein, von jeder der Regeleinrichtungen spezifische Eigenschaften hinsichtlich einer Leistungsabgabe des jeweiligen Energieerzeugers zu erfassen, die angeben wie ein Energieerzeuger auf eine Regelgrößenänderung reagiert. Solche spezifische Eigenschaften können eine Kennlinie eines Energieerzeugers darstellen, die beispielsweise angibt, welche Leistung der Energieerzeuger ausgibt, wenn eine bestimmte Stellgröße eingestellt wird. Die spezifischen Eigenschaften können insbesondere dynamische Eigenschaften des Energieerzeugers betreffen. Zum Beispiel können sie beschreiben, wie viel Zeit ein Energieerzeuger benötigt, um auf Volllast (maximale Leistungsabgabe) hochgefahren zu werden, beziehungsweise wie lange es dauert, um den Energieerzeuger abzuschalten (keine Leistungsabgabe).

Eine spezifische Eigenschaft eines Energieerzeugers kann außerdem von einer (hydraulischen oder elektrischen) Anbindung beziehungsweise physischen Anordnung des Energieerzeugers in der Energieversorgungsanlage abhängen. So kann erreicht werden, dass Energieerzeuger gemäß ihrer physischen Anordnung in der Energieversorgungsanlage angesteuert werden. Hierdurch kann beispielsweise das Erfüllen einer Energiebereitstellungsanforderung, zum Beispiel nach einer bestimmten Vorlauftemperatur, vereinfacht oder sogar erst ermöglicht werden.

Eine spezifische Eigenschaft eines Energieerzeugers gemäß der Erfindung kann ferner die von ihm bereitgestellte(n) Energieform(en) sein. Außerdem kann die spezifische Eigenschaft der von dem Energieerzeuger verwendete Energieträger sein und/oder von der Art des verwendeten Energieträgers abhängen.

Die Steuereinrichtung kann ferner dafür ausgelegt sein, eine Reihenfolge des Einschaltens und/oder Ausschaltens der Energieerzeuger in Abhängigkeit der Restriktionen und/oder der spezifischen Eigenschaften der Energieerzeuger zu bestimmen. Darüber hinaus kann die Steuereinrichtung dafür ausgelegt sein, Sollwerte für jeden Energieerzeuger zum Erfüllen der Energiebereitstellungsanforderung in Abhängigkeit der Reihenfolge des Einschaltens und/oder Ausschaltens zu bestimmen.

In einem bevorzugten Verfahren kann die Steuereinrichtung erfassen, ob eine Energiebereitstellungsanforderung zum Bereitstellen von Wärme und elektrischer Energie vorliegt. Wenn dies der Fall ist, ermittelt die Steuereinrichtung ob einer der Energieerzeuger Wärme und elektrische Energie bereitstellen kann. Wenn dies der Fall ist bestimmt die Steuereinrichtung Sollwerte für den Energieerzeuger zum Bereitstellen von Wärme und elektrischer Energie in Abhängigkeit der Energiebereitstellungsanforderung. Alternativ kann die Steuereinrichtung mindestens zwei Energieerzeuger auswählen, so dass mindestens einer der Energieerzeuger Wärme und mindestens ein anderer Energieerzeuger elektrische Energie bereitstellt.

Eine bevorzugte Steuereinrichtung umfasst eine Energieerzeugererfassungseinrichtung zum Erfassen der Energieerzeuger in der multivalenten Energieversorgungsanlage. Die Energieerzeugererfassungseinrichtung kann dafür ausgelegt sein, zu erfassen, welche Energieform die Energieerzeuger jeweils bereitstellen und/oder welche Energieträger die Energieerzeuger jeweils nutzen. Mit der Energieerzeugererfassungseinrichtung kann somit ein Konfigurieren der Steuereinrichtung wenigstens teilweise automatisch erfolgen. Vorzugsweise muss lediglich die physische Anordnung der Energieerzeuger in der Energieversorgungsanlage von einem Benutzer eingestellt werden.

### Kurzbeschreibung der Figuren

Weitere vorteilhafte Ausgestaltungen werden nachfolgend anhand eines in den Zeichnungen dargestellten Ausführungsbeispiels, auf welches die Erfindung jedoch nicht beschränkt ist, näher beschrieben.

### Es zeigen schematisch:

- Figur 1: eine Darstellung einer Steuerungslogik einer multivalenten Energieversorgungsanlage gemäß einem ersten Ausführungsbeispiel.
- Figur 2: eine Darstellung einer Steuerungslogik einer multivalenten Energieversorgungsanlage mit fünf Energieerzeugern für drei Energieformen gemäß einem zweiten Ausführungsbeispiel.
- Figur 3: ein Hydraulikschema einer multivalenten Energieversorgungsanlage gemäß einem dritten Ausführungsbeispiel mit zwei BHKWs und zwei Gaskesseln.
- Figur 4: eine Einteilung der Energieerzeuger des dritten Ausführungsbeispiels in Energieformen, Kaskaden und Gruppen.
- Figur 5: ein Hydraulikschema einer multivalenten Energieversorgungsanlage gemäß einem vierten Ausführungsbeispiel mit zwei Holzkesseln und einem Gaskessel.
- Figur 6: eine Einteilung der Energieerzeuger des vierten Ausführungsbeispiels in Kaskaden und Gruppen.
- Figur 7: ein Hydraulikschema einer multivalenten Energieversorgungsanlage gemäß einem fünften Ausführungsbeispiel mit einer Wärmepumpe und einem Gaskessel.
- Figur 8: eine Einteilung der Energieerzeuger des fünften Ausführungsbeispiels in Kaskaden und Gruppen.
- Figur 9: ein Hydraulikschema einer multivalenten Energieversorgungsanlage gemäß einem sechsten Ausführungsbeispiel mit zwei Ölkesseln und zwei Gaskesseln.
- Figur 10: eine Einteilung der Energieerzeuger des sechsten Ausführungsbeispiels in Kaskaden und Gruppen.
- Figur 11: ein Hydraulikschema einer multivalenten Energieversorgungsanlage gemäß einem siebten Ausführungsbeispiel mit zwei Gaskesseln, zwei BHKWs und zwei Holzkesseln.
- Figur 12: eine Einteilung der Energieerzeuger des siebten Ausführungsbeispiels in Kaskaden und Gruppen.

### Ausführliche Beschreibung von Ausführungsbeispielen

Bei der nachfolgenden Beschreibung einer bevorzugten Ausführungsform der vorliegenden Erfindung bezeichnen gleiche Bezugszeichen gleiche oder vergleichbare Komponenten.

### Erstes Ausführungsbeispiel

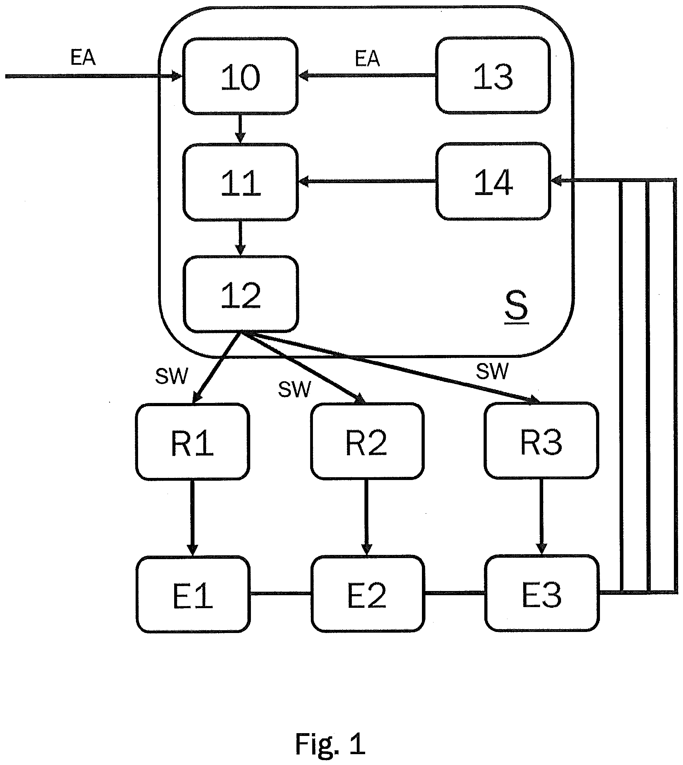

Figur 1 zeigt einen schematischen Aufbau einer Steuereinrichtung S zum Steuern einer multivalenten Energieversorgungsanlage gemäß einem ersten Ausführungsbeispiel mit drei Energieerzeugern E1-E3. Die drei Energieerzeuger E1-E3 werden durch jeweils eine Regeleinrichtung R1-R3 geregelt.

Die Steuereinrichtung S umfasst eine Anforderungserfassungseinrichtung 10, die dafür ausgelegt ist, eine Energiebereitstellungsanforderung EA zu erfassen. Die Energiebereitstellungsanforderung EA kann entweder von außen kommen, zum Beispiel von einer Vielzahl von Verbrauchern (nicht dargestellt), und über eine geeignete Datenleitung an die Anforderungserfassungseinrichtung 10 der Steuereinrichtung S übertragen werden, oder auch von einer Anforderungserzeugungseinrichtung 13 in der Steuereinrichtung S selbst erzeugt werden. Die Steuereinrichtung S weist ferner eine Sollwertbestimmungseinrichtung 11 auf, die dafür ausgelegt ist, Sollwerte SW für eine Vielzahl von Energieerzeugern E1-E3 der multivalenten Energieversorgungsanlage zu bestimmen. Die Sollwertbestimmungseinrichtung 11 überträgt die erzeugten Sollwerte SW an eine Sollwertausgabeeinrichtung 12, welche die Sollwerte SW über geeignete Datenleitungen an die Regeleinrichtungen R1-R3 der Energieerzeugern E1-E3 ausgibt.

Die Steuereinrichtung S kann ferner eine Energieerzeugererfassungseinrichtung 14 aufweisen, die dafür ausgelegt ist, die Energieerzeuger E1-E3 in der multivalenten Energieversorgungsanlage zu erfassen. Die Steuereinrichtung S kann somit dafür ausgelegt sein, automatisch, zum Beispiel beim Anschließen einer Datenkommunikationsleitung einer der Regeleinrichtungen R1-R3 an die Steuereinrichtung S, die zu steuernden Energieerzeuger E1-E3 zu erkennen. Hierdurch kann die Konfiguration der Steuereinrichtung S zum Steuern der multivalenten Energieversorgungsanlage vereinfacht werden. Gegebenenfalls muss ein Nutzer nur noch die Anbindung der erkannten Energieerzeuger in einer Infrastruktur der multivalenten Energieversorgungsanlage konfigurieren.

Die Energieerzeugererfassungseinrichtung 14 kann ferner dafür ausgelegt sein, zu erfassen, welche Energieform F1-F3 die Energieerzeuger E1-E3 jeweils bereitstellen, und welche Energieträger die Energieerzeuger E1-E3 jeweils nutzen. Die Energieerzeugererfassungseinrichtung 14 kann auch dafür ausgelegt sein, energieerzeugerspezifische Restriktionen zu erfassen.

Die Steuereinrichtung S kann beispielsweise als Mikroprozessor mit einer CPU ausgebildet sein. Die Anforderungserfassungseinrichtung 10, die Sollwertbestimmungseinrichtung 11, die Sollwertausgabeeinrichtung 12, die Anforderungserzeugungseinrichtung 13 und die Energieerzeugererfassungseinrichtung 14 können jeweils als getrennte elektronische Komponenten der Steuereinrichtung S ausgebildet sein. Alternativ kann die CPU der Steuereinrichtung S dafür ausgelegt sein, eine, mehrere oder alle Aufgaben der Sollwertbestimmungseinrichtung 11, der Sollwertausgabeeinrichtung 12, der Anforderungserzeugungseinrichtung 13 und/oder der Energieerzeugererfassungseinrichtung 14 zu übernehmen.

### Zweites Ausführungsbeispiel

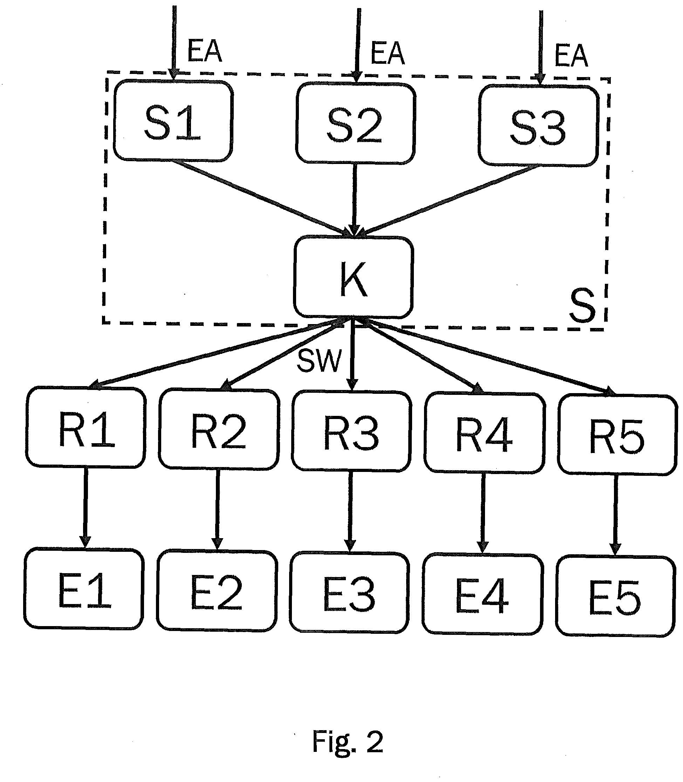

Figur 2 zeigt ein zweites Ausführungsbeispiel einer multivalenten Energieversorgungsanlage mit fünf Energieerzeugern E1, E2, E3, E4, E5. Die Steuereinrichtung S umfasst drei Steuereinheiten S1, S2, S3 und eine Koordiniereinheit K. Die Steuereinheiten S1, S2, S3 erfassen jeweils eine Energiebereitstellungsanforderung EA für je eine Energieform.

Zum Beispiel kann die erste Steuereinheit S1 eine Energiebereitstellungsanforderung EA in Form einer Wärmeanforderung, die zweite Steuereinheit S2 eine Energiebereitstellungsanforderung EA in Form einer Kälteanforderung und die dritte Steuereinheit S3 eine Energiebereitstellungsanforderung EA in Form einer Stromanforderung (beziehungsweise eine Anforderung nach elektrischer Energie) erfassen. Da es Energieerzeuger in der Energieversorgungsanlage geben kann, die mehr als eine Energieform bereitstellen, wie zum Beispiel ein Blockheizkraftwerk, das elektrische Energie und Wärme bereitstellt, kann es sein, dass die Steuereinrichtung S Energiebereitstellungsanforderungen EA für verschiedene Energieformen F1-F3 erfasst, die ein und den selben Energieerzeuger betreffen.

Die Koordiniereinheit K ist dafür ausgelegt, die durch die drei Steuereinheiten S1, S2, S3 erfassten Energiebereitstellungsanforderungen EA und die daraus ermittelten Sollwerte auf Konflikte zu überprüfen und den Einsatz der Energieerzeuger entsprechend zu koordinieren. Hierzu können den einzelnen Energieformen unterschiedliche Prioritäten eingeräumt werden. Für ein BHKW wäre es zum Beispiel sinnvoll, eine Forderung nach elektrischer Energie prioritär zu behandeln, damit es nicht ausgeschaltet wird wenn keine Wärmeanforderung vorliegt. Die Koordiniereinheit kann zudem auch eine Sollwertbestimmungseinrichtung 11, eine Sollwertausgabeeinrichtung 12 und/oder eine Anforderungserzeugungseinrichtung 13 gemäß dem ersten Ausführungsbeispiel umfassen.

Die Koordiniereinheit K ist dafür ausgelegt, das Zusammenspiel zwischen den verschiedenen Energieformen F1, F2, F3 zu regeln. Energieerzeuger, die mehrere Energieformen bereitstellen und eine Forderung zum Einschalten bezüglich einer ersten Energieform F1 erhalten, sollen aufgrund von Energiebereitstellungsanforderungen EA für eine zweite Energieform F2 oder dritte Energieform F3 nicht ausgeschaltet werden können. Hierfür ordnet die Koordiniereinheit K den Energieformen Prioritäten zu. Jene Energieform, die einem Energieerzeuger als erstes eine Forderung zum Einschalten erteilt, erhält die höchste Priorität. Die Energieform behält solange die höchste Priorität, wie ihre Forderung besteht. Falls in einem Berechnungsschritt mehrere Energieformen einem Energieerzeuger eine Forderung zum Einschalten erteilen, wird die Priorität gemäß einer vorbestimmten Prioritätenfolge ermittelt.

Die Koordiniereinheit K kann zudem Berücksichtigen, dass möglichst wenige Schaltvorgänge wie möglich erfolgen sollen. Insbesondere berücksichtigt die Koordiniereinheit K hierbei auch erzeugerspezifische Vorgaben, da es Energieerzeuger gibt, die nach einem Einschalten oder Ausschalten für eine bestimmte Zeit nicht geschaltet werden dürfen. Andere Energieerzeuger können praktisch unbegrenzt ein- und ausgeschaltet werden. Erhält die Koordiniereinheit K eine Forderung zum Einschalten beziehungsweise Ausschalten eines Energieerzeugers, kann die Koordiniereinheit K eine Schätzung des Energiebedarfs der unterschiedlichen Energieformen durchführen. Außerdem kann die Koordiniereinheit eine Schätzung eines zukünftigen Energiebedarfs durchführen. Entsprechend kann die Koordiniereinheit K ermitteln, ob ein Einschalten oder Ausschalten von Energieerzeugern vermieden werden kann.

### Drittes Ausführungsbeispiel

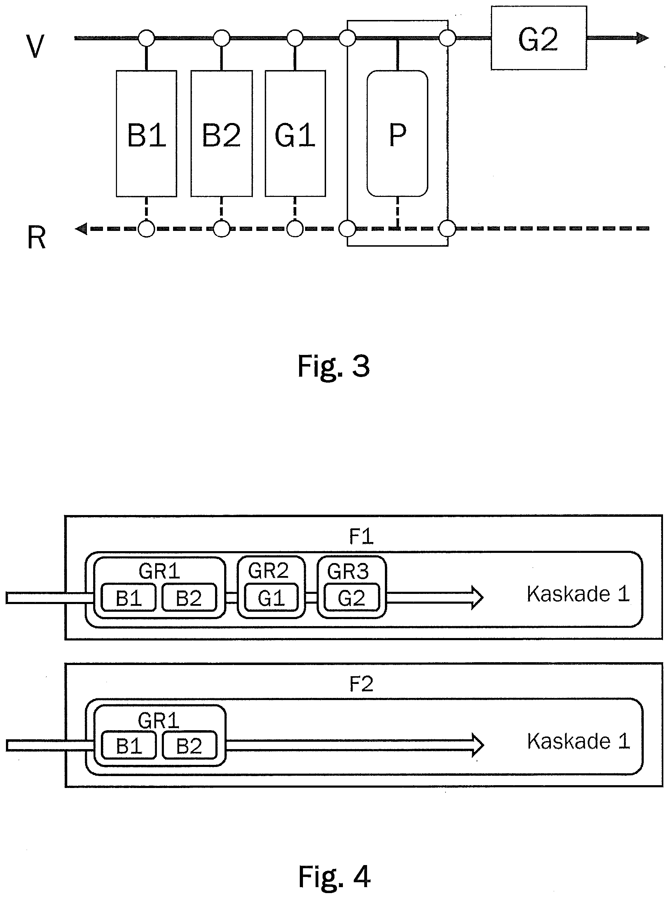

Figur 3 zeigt eine schematische Darstellung eines dritten Ausführungsbeispiels einer multivalenten Energieversorgungsanlage zum Bereitstellen von Wärme und elektrischer Energie. In Figur 3 ist ein Hydraulikschema (eine schematische Darstellung der Infrastruktur) der Energieversorgungsanlage dargestellt, bei der Wärme an ein fluides Trägermedium, zum Beispiel Wasser, abgegeben wird. Das Trägermedium transportiert die Wärme über einen Vorlauf V zu einem Verbraucherkreislauf (nicht dargestellt). Der Vorlauf ist als durchgezogener Pfeil dargestellt, der die Fließrichtung des Trägermediums illustriert. Im Verbraucherkreislauf kann eine Vielzahl von Verbrauchern, zum Beispiel eine Vielzahl von Heizkörpern, angeordnet sein.

Über einen Rücklauf R fließt das Trägermedium vom Verbraucherkreislauf zurück zur Energieversorgungsanlage. Der Vorlauf ist als gestrichelter Pfeil dargestellt, der die Fließrichtung des Trägermediums illustriert. Das Trägermedium kann beispielsweise mittels Umwälzpumpen zum Fließen gebracht werden, die im Erzeugerkreislauf, beispielsweise in den Energieerzeugern B1, B2, G1, G2, und/oder im Verbraucherkreislauf angeordnet sein können. Zudem können Ventile und/oder Drosselklappen und/oder Sensoren zum Messen des Stroms und/oder der Temperatur in den Energieerzeugern B1, B2, G1, G2 und/oder im Vorlauf V und/oder im Rücklauf R angeordnet sein, um einen Fluss durch die Energieerzeuger B1, B2, G1, G2 zu steuern, beziehungsweise zu regeln.

Die Energieversorgungsanlage weist zwei Blockheizkraftwerke (BHKW) B1, B2 und zwei Gaskessel G1, G2 auf, wobei die beiden BHKWs B1, B2 jeweils zwischen dem Vorlauf V und dem Rücklauf R parallel zueinander angeordnet sind. Über den Rücklauf R fließt das von Verbraucherseite kommende Trägermedium zu den Energieerzeugern, die dem Trägermedium Wärme zuführen. Über den Vorlauf V fließt das Trägermedium zum Verbraucherkreislauf (nicht dargestellt).

Ein erster Gaskessel G1 ist ebenfalls parallel zu den BHKWs B1, B2 stromabwärts am Vorlauf V angeordnet. Weiter stromabwärts am Vorlauf V befindet sich zudem ein Pufferspeicher P parallel zum ersten Gaskessel G1 und den BHKWs B1, B2. Stromabwärts vom Pufferspeicher P ist ein zweiter Gaskessel G2 in Reihe im Vorlauf V angeordnet, so dass der zweite Gaskessel G2 die Vorlauftemperatur direkt anheben kann. Aufgrund der Anordnung des zweiten Gaskessels G2 im Vorlauf nach dem Pufferspeicher kann er die Temperatur des im Pufferspeicher gespeicherten Wassers nicht beeinflussen.

Die BHKWs B1, B2 und die Gaskessel G1, G2 weisen jeweils eine Regeleinrichtung R1, R2, R3, R4 zum Regeln von Regelgrößen der Energieerzeuger B1, B2, G1, G2 auf. Eine Steuereinrichtung S ist mit den Regeleinrichtungen R1, R2, R3, R4 verbunden und kann periodisch die eingestellten Regelgrößen abfragen und Sollwerte SW, beispielsweise über eine Sollwertausgabeeinrichtung 12, an die Regeleinrichtungen R1, R2, R3, R4 ausgeben. Die Steuerungslogik kann somit wie in Figur 1 dargestellt, aber mit vier Energieerzeugern B1, B2, G1, G2, ausgeführt sein.

Die Steuereinrichtung S der Energieversorgungsanlage des Ausführungsbeispiels kann gemäß Vorgaben eines festgelegten Betriebsmodus gesteuert werden. Der erste Gaskessel G1 soll dabei erst dann eingesetzt werden, wenn beide BHKWs B1, B2 bereits in Betrieb sind und die von ihnen im Vorlauf V bereitgestellte Wärme nicht ausreicht, um eine Energiebereitstellungsanforderung EA, zum Beispiel in Form einer geforderten Temperatur im Pufferspeicher P oder einer Anlagenvorlauftemperatur an der Übergabe (rechts in Figur 3) zum Verbraucherkreislauf, zu erfüllen. Der zweite Gaskessel G2 soll gemäß dem Betriebsmodus erst dann eingesetzt werden, wenn beide BHKWs B1, B2 und der erste Gaskessel G1 bereits in Betrieb sind und die bereitgestellte Wärme nicht ausreicht um die Energiebereitstellungsanforderung zu erfüllen.

Anhand von Figur 4 wird nun erklärt, wie eine Reihenfolge des Einschaltens beziehungsweise Ausschaltens in der multivalenten Energieversorgungsanlage bestimmt wird. Da die multivalente Energieversorgungsanlage sowohl Wärme als auch elektrische Energie bereitstellen kann werden zwei Energieformen F1 (für Wärme) und F2 (für elektrische Energie) bereitgestellt.

Zwischen den BHKWs B1, B2 soll ein Laufzeitausgleich stattfinden. Dazu werden die beiden BHKWs B1, B2 in einer Gruppe GR1 zugeordnet. Innerhalb der Gruppe können die BHKWs B1, B2 ihre Stellen tauschen. Ein Kriterium dafür an welcher Stelle ein BHKW in der Gruppe stehen soll kann der Laufzeitunterschied zwischen den BHKWs B1, B2 sein. Der Laufzeitunterschied ist somit als ein stellenspezifisches Kriterium. Ein Kriterium, das erzeugerspezifisch beispielsweise für das BHKW B1 ist, wandert beim Tauschen der Stellen mit und bleibt somit beim Energieerzeuger. Um ein ständiges Tauschen der Stellen der beiden BHKWs B1, B2 innerhalb der Gruppe GR1 zu verhindern, kann zudem ein Mindestlaufzeitunterschied festgelegt werden, ab dem ein Laufzeitausgleich stattfinden darf. Die Steuereinrichtung erfasst die Laufzeiten der BHKWs und legt in Abhängigkeit der erfassten Laufzeiten die Reihenfolge der BHKWs fest.

Die Reihenfolge, in der der erste Gaskessel G1 und der zweite Gaskessel G2 eingeschaltet werden soll fest sein. Es soll kein Laufzeitausgleich zwischen den Gaskesseln G1, G2 stattfinden. Der Grund hierfür kann beispielsweise sein, dass der erste Gaskessel G1 einen besseren Nutzungsgrad (zum Beispiel ein Brennwertkessel) als der zweite Gaskessel G2 (zum Beispiel ein Niedertemperaturkessel) hat. Um dies zu erreichen, werden die beiden Gaskessel G1, G2 zwei separaten Gruppen GR2, GR3 zugeordnet. Der Nutzungsgrad der Gaskessel ist ein Beispiel für eine spezifische Eigenschaft der Energieerzeuger.

Die drei Gruppen GR1, GR2, GR3 der ersten Energieform F1 können einer gemeinsamen Kaskade 1 zugeteilt werden. Die Reihenfolge der Gruppen GR1, GR2, GR3 kann fest oder variabel sein. Damit die BHKWs B1, B2 so viele Betriebsstunden wie möglich erreichen können, wird die Gruppe GR1 an erster Stelle innerhalb der Kaskade 1 angeordnet. Da der Gaskessel G1 dem Gaskessel G2 gegenüber bevorzugt betrieben werden soll, wird die Gruppe GR2 mit dem Gaskessel G1 an zweiter Stelle vor der Gruppe GR3 mit dem Gaskessel G2 in der Kaskade 1 angeordnet.

Die Steuereinrichtung empfängt auch Energiebereitstellungsanforderungen einer angeforderten elektrischen Leistung (zum Beispiel in Form eines elektrischen Stroms und/oder einer elektrischen Spannung). Die BHKWs B1, B2 können daher neben einer Energiebereitstellungsanforderung für Wärme auch zum Erfüllen der Anforderungen nach elektrischer Energie geschaltet beziehungsweise geregelt werden. Daher werden die BHKWs B1, B2 einer zweiten Energieform F2 für elektrische Energie zugeordnet. Energiebereitstellungsanforderungen nach elektrischer Energie und/oder Schaltanforderung für Energieerzeuger, die elektrische Energie bereitstellen, werden von der Steuereinrichtung S berücksichtigt. Die BHKWs würden in diesem Beispiel wie folgt zum Bereitstellen von Wärme betrieben werden:
Das erste BHKW B1 an erster Stelle innerhalb der Gruppe GR1 (je nach Laufzeitausgleich kann dies auch das zweite BHKW B2 sein) wird bei Unterschreiten einer geforderten Anlagenvorlauftemperatur eingeschaltet. Die geforderte Anlagenvorlauftemperatur wird hierbei stromabwärts vom zweiten Gaskessel G2 im Vorlauf V gemessen. Bei Überschreiten eines vorbestimmten Schwellenwertes der Temperatur im Pufferspeicher P, die an einer unten im Pufferspeicher P liegenden Schicht gemessen wird, wird das erste BHKW B1 ausgeschaltet.

Die Steuerung des zweiten BHKW B2 an zweiter Stelle in Gruppe GR1 erfolgt in ähnlicher Weise, wie die des ersten BHKW B1. Wenn trotz eingeschaltetem BHKW B1 ein Unterschreiten der geforderten Anlagenvorlauftemperatur erfasst wird, schaltet die Steuereinrichtung S das zweite BHKW B2 hinzu. Bei Überschreiten eines vorbestimmten Schwellenwertes der Temperatur im Pufferspeicher P, die an einer in der Mitte des Pufferspeicher P liegenden Schicht gemessen wird, schaltet die Steuereinrichtung S das zweite BHKW B2 wieder ab.

Der Gaskessel G1 wird bei bereits eingeschalteten BHKWs B1 und B2 bei Unterschreiten der geforderten Anlagenvorlauftemperatur eingeschaltet. Das Ausschalten des Gaskessels G1 erfolgt wenn ein Schwellenwert der Temperatur im Pufferspeicher P, die in einer oben liegenden Schicht gemessen wird, überschritten wird.

Sind die ersten drei Energieerzeuger in Kaskade 1 der Energieform Wärme F1 bereits in Betrieb aber es wird ein Unterschreiten der geforderten Anlagenvorlauftemperatur gemessen, so wird der zweite Gaskessel G2 eingeschaltet. Sobald die geforderte Anlagenvorlauftemperatur überschritten wird schaltet die Steuereinrichtung S den Gaskessel G2 wieder ab.

Insbesondere werden die Anforderungen aus der Energieform Wärme und aus der Energieform elektrische Energie von der Steuerungseinrichtung koordiniert erfasst und weiterverarbeitet. Dies entspricht einer Kompromissfindung der Anforderungen aus der Energieform Wärme und der Energieform elektrische Energie. Würde die Energieform Wärme beispielsweise ein Ausschalten eines BHKWs fordern, würde die Steuerungseinrichtung S zunächst prüfen, ob die Energieform elektrische Energie weiterhin den Betrieb des BHKWs fordert, bevor die Freigabe entzogen wird. Hierzu kann die Steuereinrichtung S dafür ausgelegt sein, den Energiebedarf der betreffenden Energieform abschätzen und die Entscheidung über das Entziehen der Freigabe davon abhängig machen, ob ein Weiterbetreiben des BHKWs erforderlich ist. Durch dieses Verfahren kann die Anzahl der Ein- und Ausschaltvorgänge minimiert werden, wodurch ein Verschleiß der Energieerzeuger reduziert werden kann.

Gemäß dem Ausführungsbeispiel kann eine Freigabe an einen Energieerzeuger erteilt werden, wenn mindestens eine Energieform die Freigabe des Energieerzeugers fordert. Die Freigabe kann dann entzogen werden, wenn keine Energieform mehr den Betrieb des Energieerzeugers fordert.

### Viertes Ausführungsbeispiel

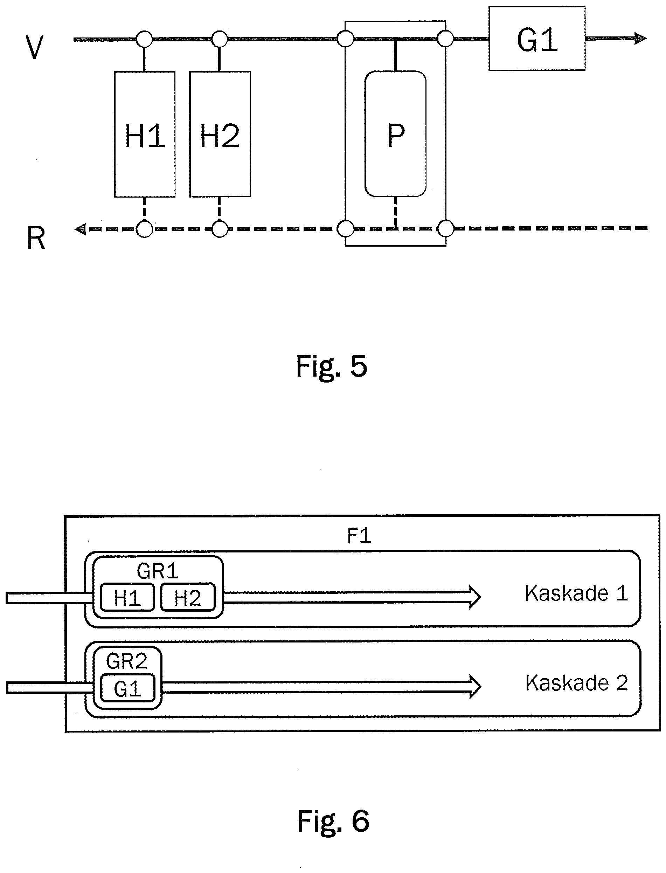

Figur 5 zeigt ein Hydraulikschema einer Energieversorgungsanlage gemäß einem vierten Ausführungsbeispiel. Ähnlich wie im dritten Ausführungsbeispiel weist die Energieversorgungsanlage einen Pufferspeicher P zwischen Vorlauf V und Rücklauf R und einen Gaskessel G1 im Vorlauf V stromabwärts vom Pufferspeicher P auf. Ein erster Holzkessel H1 und ein zweiter Holzkessel H2 sind jeweils parallel zueinander und parallel zum Pufferspeicher P stromaufwärts am Vorlauf V1 angeordnet.

Eine Steuereinrichtung S der Energieversorgungsanlage gemäß dem vierten Ausführungsbeispiel ist so eingerichtet, dass die Holzkessel H1, H2 bevorzugt eingesetzt werden, wobei der Gaskessel G1 die Spitzenlast abdecken soll. Hierdurch wird der günstigere Brennstoff Holz für die Grundlast (Erfüllen einer Mindestenergieanforderung) verwendet, während die Trägheit der Holzkessel H1, H2 durch die Verwendung eines schnell einschaltbaren und auch schnell wieder ausschaltbaren Gaskessel G1 ausgeglichen wird. Der Gaskessel G1 kann somit eine Spitzenlast bereitstellen (Erfüllen einer Maximalenergieanforderung).

Somit kann durch die auf die spezifischen Eigenschaften der Energieerzeuger angepasste Steuerung der multivalenten Energieversorgungsanlage eine hohe Regelgüte erreicht werden. Eine Energiebereitstellungsanforderung in Form einer geforderten Anlagenvorlauftemperatur am Übergang zu einem Verbraucherkreislauf (nicht dargestellt) kann somit schnell erreicht und anschließend gehalten werden. Dies kann insbesondere dann von Vorteil sein, wenn auf der Verbraucherseite sensible Prozesse angeschlossen sind (zum Beispiel Produktionsmaschinen).

Als weitere Anforderung an die Steuerung der multivalenten Energieversorgungsanlage kann vorgegeben werden, dass zwischen den Holzkesseln ein Laufzeitausgleich stattfinden soll. Außerdem sollen die Holzkessel H1, H2 im oberen Leistungsbereich betrieben werden, wo eine besonders saubere also schadstoffarme Verbrennung stattfinden kann und ein möglichst hoher Wirkungsgrad erreicht wird. Hiermit kann zudem eine möglichst lange Betriebsdauer zwischen Wartungsvorgängen erreicht werden.

Gemäß dem Stand der Technik wird üblicherweise eine feste Ein- und Ausschaltfolge vorgegeben, wobei kein Laufzeitausgleich erfolgen kann. Der erste Holzkessel H1 würde dann wesentlich mehr Betriebsstunden erhalten, als der zweite Holzkessel H2. Bei einer Laständerung (zum Beispiel durch Hochfahren der Energieversorgungsanlage nach einem Stillstand, etwa nach einer Wartung oder an einem Wochenende) wird zunächst der erste Holzkessel H1 angeschaltet. Dieser benötigt jedoch eine relativ lange Zeit, bis eine ausreichend große Wärmemenge geliefert werden kann, um eine Energiebereitstellungsanforderung zu erfüllen. Daher würde (gegebenenfalls nach einer vorbestimmten Wartezeit) bei einem solchen Verfahren bei Nichterfüllen der Energiebereitstellungsanforderung zunächst der zweite Holzkessel H2 eingeschaltet werden. Erst nach einer weiteren Wartezeit könnte der Gaskessel G1 ebenfalls eingeschaltet werden. Der Gaskessel G1 könnte die geforderte Wärmemenge in relativ kurzer Zeit liefern. Bei einem solchen Vorgehen gemäß dem Stand der Technik würde eine relativ lange Zeit vergehen, bis die geforderte Wärmemenge bereitgestellt werden kann. In anderen Worten, die Regelgüte der Energieversorgungsanlage wäre bei einem solchen Vorgehen stark eingeschränkt. Als nachteilige Folge könnten beispielsweise Produktionsmaschinen im Verbraucherkreislauf erst mit großer Zeitverzögerung in Betrieb gehen.

Nach einer längeren Aufwärmzeit liefern die Holzkessel H1, H2 Wärme (z. B. nach einer Stunde) und die Anlagenvorlauftemperatur steigt an, da mehr Wärme produziert wird als durch die Verbraucher oder den Pufferspeicher P abgenommen werden kann. Dabei kann die Vorlauftemperatur über den geforderten Sollwert ansteigen. Typischerweise wird das Überschwingen der Vorlauftemperatur über den Sollwert als Kriterium zum Ausschalten des Gaskessels G1 verwendet. Hieraus resultiert eine entsprechend schlechte Regelgüte, wodurch wärmeverbrauchende Produktionsmaschinen im Verbraucherkreislauf eventuell außer Betrieb gehen könnten. Ist die abgenommene Leistung geringer als die Summe der Nennleistung beider Holzkessel H1, H2, werden die Holzkessel H1, H2 in ungünstigen Betriebspunkten (jeweils mit niedriger Leistung) betrieben.

Ist die abgenommene Leistung geringer als die Summe der Grundleistung beider Holzkessel H1, H2, wird der zweite Holzkessel nach kurzer Zeit außer Betrieb genommen. Eine schlechte Energiebilanz und negative Auswirkungen auf Lebensdauer und Wartungsintensität der Holzkessel H1, H2 sind die Folge.

Figur 6 zeigt, wie eine erfindungsgemäße Reihenfolge des Einschaltens und/oder Ausschaltens für die Energieerzeuger der Energieversorgungsanlage des vierten Ausführungsbeispiels bestimmt werden kann. Die Holzkessel H1, H2 sind in einer Gruppe GR1 zusammengefasst, so dass wie oben beschrieben ein Laufzeitausgleich zwischen den beiden gleichartigen Energieerzeugern H1, H2 stattfinden kann.

Würde man den Gaskessel G1 ebenfalls in der ersten Kaskade 1 als letzten Energieerzeuger anordnen, könnte er entsprechend der sequentiellen Reihenfolge in der Kaskade 1 erst dann eingeschaltet werden, wenn die Holzkessel H1, H2 bereits in Betrieb sind und die benötige Energiemenge nicht ausreicht, um die Energiebereitstellungsanforderung EA zu erfüllen. Der gut regelbare Gaskessel G1 könnte mithin nicht zum schnellen Erfüllen von Spitzenlasten eingesetzt werden.

Die Holzkessel H1, H2 würden ähnlich wie die BHKWs B1, B2 im dritten Ausführungsbeispiel ein- und ausgeschaltet werden. Der Gaskessel G1 wird hier jedoch in einer separaten Kaskade 2 angeordnet und kann somit in Abhängigkeit einer am Anlagenvorlauf gemessenen Differenz zwischen einer Isttemperatur und einer Solltemperatur betrieben werden. Folglich kann der Gaskessel G1 unabhängig vom Schaltzustand der Holzkessel H1, H2 betrieben werden, so dass eine verbesserte Regelgüte erreicht wird. Um zu vermeiden, dass die Holzkessel H1, H2 in ungünstigen Arbeitspunkten mit geringer Leistung betrieben werden, obwohl die Leistung nur eines Holzkessels H1, H2 zur Deckung der benötigen Leistung ausreichen würde, kann diese Situation durch die Auswertung der Leistungsbilanz innerhalb der Gruppe Gr1 detektiert werden. Ein entsprechendes Kriterium zum Ausschalten des zweiten Holzkessels H2 kann hierdurch festgelegt werden.

Beim Hochfahren der Energieversorgungsanlage nach einem längeren Stillstand erkennt die Steuereinrichtung S, dass die Energiebereitstellungsanforderung durch nur einen Holzkessel H1 erfüllt werden könnte. Somit wird der zweite Holzkessel H2 erst gar nicht durch die Steuereinrichtung S freigegeben. Da der Holzkessel H1 aber eine lange Zeit benötigt, um aufzuheizen, wird der Gaskessel G1 zum Bereitstellen der geforderten Wärmemenge eingeschaltet. Sobald der Holzkessel H1 ausreicht, um die Forderung zu erfüllen wird der Gaskessel G1 wieder ausgeschaltet.

Sinkt der Wert der geforderten Energiemenge so weit ab, dass die vom Holzkessel H1 bereitgestellte Vorlauftemperatur die geforderte Anlagenvorlauftemperatur überschreitet, kann die Steuereinrichtung die gelieferte Wärme im Pufferspeicher P zwischenspeichern. Ist ausreichend Wärme im Pufferspeicher P vorhanden, so kann dieser wie ein Energieerzeuger zum Bereitstellen von Wärme von der Steuereinrichtung S herangezogen werden, wodurch insbesondere schnell auftretende Leistungsschwankungen ausgeglichen werden können.

### Fünftes Ausführungsbeispiel

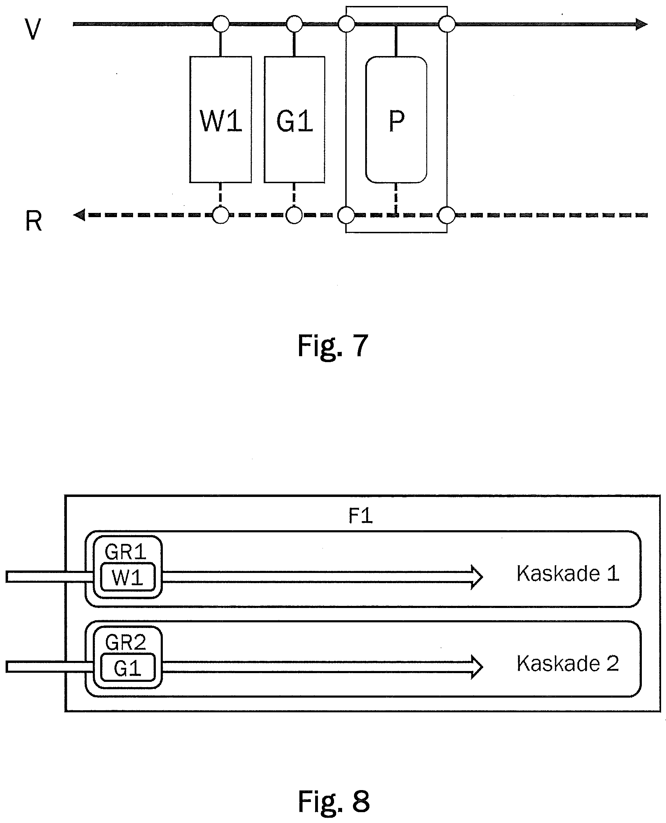

Figur 7 zeigt ein Hydraulikschema einer Energieversorgungsanlage gemäß einem fünften Ausführungsbeispiel. Eine Wärmepumpe W1 und ein Gaskessel G1 sind parallel zu einander und parallel zu einem Pufferspeicher P zwischen Vorlauf V und Rücklauf R angeordnet.

Die Wärmepumpe W1 soll bevorzugt eingesetzt werden und eine Mindestenergieanforderung erfüllen. Der Gaskessel G1 soll als Spitzenlastkessel lediglich die Differenz zur geforderten Wärmemenge decken und somit eine Maximalenergieanforderung erfüllen.

Damit die Wärmepumpe W1 zuerst eingesetzt wird, muss gemäß dem Stand der Technik eine feste (sequenzielle) Ein- und Ausschaltfolge vorgegeben werden. Die Wärmepumpe W1 kann allerdings bei einer zu hohen Rücklauftemperatur nicht in Betrieb gehen. Aufgrund der festen Einschaltreihenfolge kann dann aber auch der Gaskessel G1 nicht in Betrieb genommen werden. Die geforderte Wärmemenge kann dann nicht geliefert werden. Dies ist ein Beispiel dafür, wie ein erzeugerspezifisches Kriterium in Abhängigkeit eines Anlagenparameters (Forderung nach einer Rücklauftemperatur) ein Anschalten des Energieerzeugers verhindern kann und somit in einer sequenziellen Schaltreihenfolge ein Anschalten weiterer Energieerzeuger blockiert.

Die erfindungsgemäße Lösung dieses Problems wird anhand von Figur 8 beschrieben. Die Wärmepumpe W1 und der Gaskessel G1 sind jeweils in eigene Kaskaden 1 und 2 eingeteilt. Dies ermöglicht, dass die beiden Energieerzeuger W1, G1 parallel und unabhängig voneinander geschaltet werden können. Damit die Wärmepumpe W1 bevorzugt eingesetzt wird, bestimmt die Steuereinrichtung S die Sollwert- und Schaltvorgaben zum Erfüllen einer Energiebereitstellungsanforderung in Abhängigkeit von erzeugerspezifischen Kriterien. In dem vorliegenden Beispiel beziehen sich die erzeugerspezifischen Kriterien auf die Art des Energieerzeugers und seine dynamische Eigenschaft. So erfasst die Steuereinrichtung S die Restriktionen der Energieerzeuger, die zum Beispiel ein Ausschalten der Wärmepumpe W1 bei zu hoher Rücklauftemperatur erzwingen und eine bestimmte Wartezeit zwischen Schaltvorgängen vorgeben.

Anders als in Figur 8 gezeigt könnten die Wärmepumpe W1 und der Gaskessel G1 auch zusammen in einer Kaskade 1 platziert werden. Würde nun W1 bei Überschreiten eines festgelegten Temperatur-Schwellenwerts ausgeschaltet, so würde die Steuereinrichtung S eine Restriktion von W1 bekommen, dass W1 für eine bestimmte Zeit nicht mehr einschaltbar ist. Dies würde dazu führen, dass W1 in der Einschalt-Reihenfolge übersprungen würde und der nächste Energieerzeuger, hier der Gaskessel G1, bei Bedarf eingeschaltet werden könnte.

### Sechstes Ausführungsbeispiel

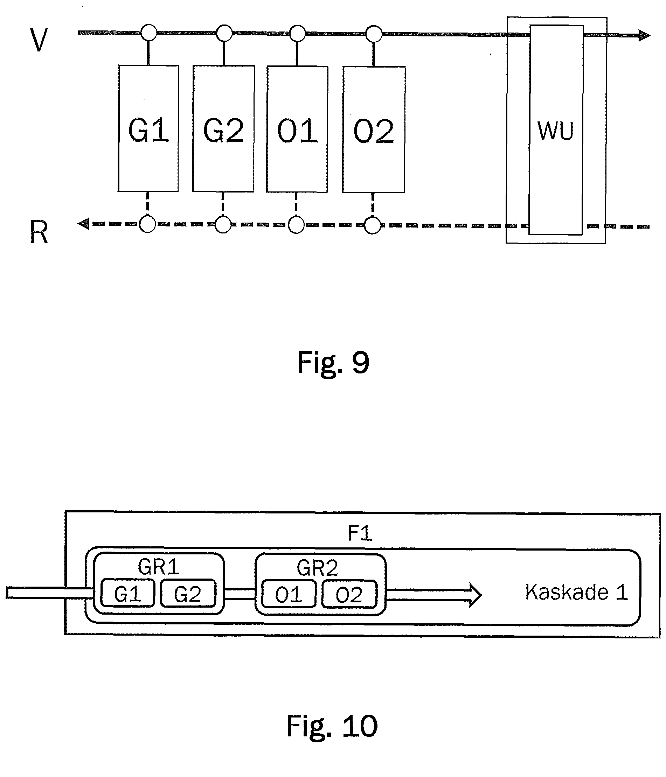

In einem sechsten Ausführungsbeispiel umfasst die Energieversorgungsanlage zwei Gaskessel G1, G2 und zwei Ölkessel O1, O2, die alle parallel zueinander zwischen Vorlauf V und Rücklauf R angeordnet sind. Für die Übergabe der Wärme in einen Verbraucherkreislauf ist eine Wärmeübergabe vorgesehen. Ein Hydraulikschema der Energieversorgungsanlage gemäß dem sechsten Ausführungsbeispiel ist in Figur 9 dargestellt.

Bei der Steuerung der Energieversorgungsanlage sollen die aktuellen Energiekosten und/oder die Verfügbarkeit von Erdgas und Heizöl berücksichtigt werden. Der Energieträger mit den geringeren Energiekosten soll bevorzugt eingesetzt werden. Außerdem soll zwischen den Kesseln gleicher Brennstoffart ein Laufzeitausgleich stattfinden.

Alle Kessel können in nur einer Kaskade betrieben werden. Um die oben formulierte Aufgabe zu erfüllen werden die Gaskessel G1, G2 und die Ölkessel O1, O2 wie in Figur 10 dargestellt jeweils einer eigenen Gruppe zugeordnet. Innerhalb der Gruppen findet jeweils ein Laufzeitausgleich statt. In Abhängigkeit der Energiepreise wird die Reihenfolge der Gruppen gewählt, so dass die Gruppe mit den geringeren Wärmegestehungskosten zuerst eingeschaltet wird.

### Siebtes Ausführungsbeispiel

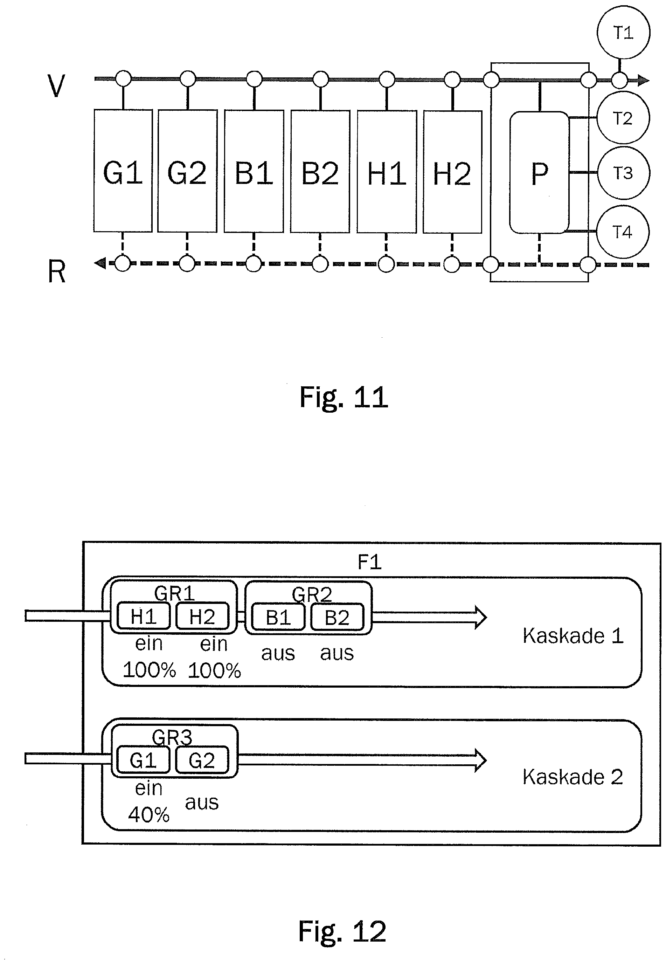

Figur 11 zeigt ein Hydraulikschema einer multivalenten Energieversorgungsanlage gemäß einem siebten Ausführungsbeispiel. Die multivalente Energieversorgungsanlage umfasst je zwei Gaskessel G1, G2, die Energie in Form von Wärme bereitstellen, zwei BKHWs B1, B2, die Energie in Form von Wärme und elektrischen Strom bereitstellen, zwei Holzkessel H1, H2, die Energie in Form von Wärme bereitstellen, und einen Pufferspeicher P. Außerdem ist im Vorlauf V ein Temperatursensor T1 angeordnet, der die Anlagenvorlauftemperatur misst. Im Pufferspeicher P sind drei Temperatursensoren T2, T3, T4 angeordnet, die jeweils die Temperatur im Pufferspeicher P messen, respektive in einem oberen Bereich, in einem mittleren Bereich und in einem unteren Bereich des Pufferspeichers. Die Gaskessel G1, G2 nutzen Erdgas aus einer Gaszuleitung als Energieträger, die BHKWs B1, B2 nutzen Diesel aus einem Brennstofftank und die Holzkessel H1, H2 nutzen Holzpellets aus einem Holzpelletspeicher, der die Holzkessel H1, H2 über eine Fördereinrichtung mit Brennstoff beschickt.

Jeder der Energieerzeuger G1, G2, B1, B2, H1, H2 weist jeweils eine Regeleinrichtung zum Regeln von Regelgrößen des jeweiligen Energieerzeugers G1, G2, B1, B2, H1, H2 auf. Diese Regelgrößen umfassen unter anderem eine abgegebene Wärmeleistung und einen Volumenstrom eines fluiden Trägermediums durch die Energieerzeuger G1, G2, B1, B2, H1, H2, an das die Wärme abgegeben wird. Zum Steuern des Volumenstroms sind in den Energieerzeugern G1, G2, B1, B2, H1, H2 selbst oder in den mit den Energieerzeugern G1, G2, B1, B2, H1, H2 verbundenen Leitungen (Vorlauf V und/oder Rücklauf R) jeweils Ventile und/oder Drosselklappen und/oder Umwälzpumpen angeordnet. Bei den BHKWs B1, B2 gehört zu den Regelgrößen auch ein abgegebener elektrischer Strom beziehungsweise eine elektrische Spannung.

Die Steuerung der Energieversorgungsanlage durch eine Steuereinrichtung S zum Erfüllen einer erfassten Energiebereitstellungsanforderung EA, die zum Beispiel eine geforderte Anlagenvorlauftemperatur am Messpunkt T1 oder eine Pufferspeichertemperatur an einem der drei Messpunkte T2, T3, T4 des Pufferspeichers P festlegtb

Die Steuereinrichtung S erfasst eine Reihenfolge des Einschaltens und/oder Ausschaltens der Energieerzeuger G1, G2, B1, B2, H1, H2. Die Reihenfolge wird anhand der in Figur 12 dargestellten Einteilung der Energieerzeuger G1, G2, B1, B2, H1, H2 in Gruppen und Kaskaden festgelegt. Die beiden gleichartigen Holzkessel H1, H2 werden einer gemeinsamen Gruppe GR1 zugeordnet. Wie schon zuvor beschrieben kann in einer Gruppe ein Laufzeitausgleich zwischen den Holzkesseln H1, H2 stattfinden. In entsprechender Weise werden die beiden BHKWs B1, B2 der Gruppe GR2 zugeordnet und ebenfalls mit Laufzeitausgleich betrieben. Die beiden Gaskessel G1 und G2 werden einer Gruppe GR3 zugeordnet. Auch zwischen den Gaskessel G1, G2 kann ein Laufzeitausgleich stattfinden.

Die Holzkessel H1, H2 und die BHKWs B1, B2 werden als bevorzugte Energieerzeuger eingestuft, da ihr Betrieb im Vergleich zu den Gaskesseln G1, G2 in Hinblick auf die Verfügbarkeit der genutzten Energieträger Vorteile aufweist. Zudem soll in einer ersten Betriebsart möglichst ununterbrochen elektrische Energie bereitgestellt werden. Die Gruppen GR1 und GR2 werden dazu wie in Figur 12 dargestellt einer ersten Kaskade 1 zugeordnet. Die Reihenfolge der Gruppen GR1 und GR2 innerhalb der Gruppe kann anhand von gruppenspezifischen Kriterien erfolgen. So kann die Reihenfolge zum Beispiel je nach aktuellen Brennstoffkosten festgelegt werden, in Abhängigkeit von geplanten Wartungsmaßnahmen erfolgen oder von einer Energiebereitstellungsanforderung für elektrische Energie abhängig gemacht werden. Außerdem können auch andere spezifische Eigenschaften der Energieerzeuger die Reihenfolge der Gruppen GR1, GR2 in der Kaskade 1 beeinflussen.

In einer weiteren Betriebsart der multivalenten Energieversorgungsanlage kann der Steuereinrichtung S vorgegeben werden, dass eine möglichst große Energiemenge im Pufferspeicher P bevorratet werden soll. Für die Puffertemperaturregelung wird hierbei ein Puffertemperatursensor T4 an einem unteren Bereich des Pufferspeichers P ausgewählt. Die Puffersolltemperatur wird beispielsweise auf 70°C eingestellt. Die Steuereinrichtung S sorgt dann dafür, dass der Pufferspeicher P vollständig auf mit einer Temperatur von 70°C geladen wird, indem die Energieerzeuger G1, G2, B1, B2, H1, H2 zum Bereitstellen der benötigten Wärmemenge betrieben werden.

Soll der Pufferspeicher P in einer weiteren Betriebsart nur ungefähr zur Hälfte mit Wärme bevorratet werden, wird ein Puffertemperatursensor T3 in einem mittleren Bereich des Pufferspeichers P für die Puffertemperaturregelung ausgewählt.

In einer Betriebsart, bei der keine Pufferbevorratung erwünscht ist wird ein Puffertemperatursensor T2 in einem oberen Bereich des Pufferspeichers P für die Puffertemperaturregelung ausgewählt. Die Vorgabe einer Puffersolltemperatur ist nicht erforderlich, da eine Energieerzeugervorlaufsolltemperatur aus einer Anlagenvorlaufsolltemperatur errechnet werden kann. Es wird nur so viel Energie erzeugt, wie von den Verbrauchern aufgenommen wird, der Pufferspeicher P wird in diesem Fall nicht geladen. Die Anlagenvorlauftemperatur kann beispielweise von einem Temperatursensor T1 am Vorlauf V gemessen werden.

Die Leistungsabgabe von Holzkesseln kann nur schlecht moduliert werden. Die beiden Holzkessel H1, H2 des Ausführungsbeispiels können entweder bei maximaler Leistung betrieben werden oder ausgeschaltet sein. Wie zuvor beschrieben sind die Vorgänge des Ein- beziehungsweise Ausschaltens vom Zuführen beziehungsweise Aufbrauchens des Brennstoffs Holz in der Brennkammer abhängig und somit relativ zeitintensive Prozesse. Die Holzkessel H1, H2 reagieren somit nur sehr träge auf eine Regelgrößenänderung und können entweder keine Leistung (Minimalwert) oder maximale Leistung (Maximalwert) abgeben. Aufgrund dieser spezifischen Eigenschaften werden die Holzkessel in die gemeinsame Gruppe GR1 eingeteilt.

Ist mindestens einer der Holzkessel H1, H2 in Betrieb, so kann er bis zum vollständigen Verbrennen des geladenen Brennstoffs erst einmal nicht mehr ausgeschaltet werden. Die Regeleinrichtung des Holzkessels teilt dann der Steuereinrichtung S mit, dass eine Restriktion für den Holzkessel H1 oder H2 vorliegt, die besagt, dass der Holzkessel eingeschaltet sein muss.

Hat beispielsweise einer der Holzkessel H1, H2 eine Maximalbetriebszeit erreicht, und muss er gewartet werden, so kann die Steuereinrichtung S die entsprechende Restriktion erfassen, dass der Holzkessel H1 oder H2 ausgeschaltet sein muss.

Da die Holzkessel H1, H2 aufgrund ihrer Trägheit möglichst dauerhaft betrieben werden, eignet sich die Gruppe GR1 mit den Holzkesseln H1, H2 besonders gut zum Bereitstellen einer Mindestenergieanforderung der Energieversorgungsanlage in Form von Wärme. Alternativ kann auch die Gruppe GR2 mit den BHKWs B1, B2 zum Bereitstellen einer Mindestenergieanforderung der Energieversorgungsanlage in Form von Wärme verwendet werden. Dabei kann die Gruppe GR2 auch gleichzeitig eine Mindestenergieanforderung der Energieversorgungsanlage in Form von elektrischer Energie bereitstellen. Die Steuereinrichtung S kann eine der beiden Gruppen GR1 und GR2 zum Bereitstellen der Mindestenergieanforderung in Abhängigkeit der gewählten Betriebsart auswählen.

Die in ihrer Leistungsabgabe gut regelbaren und schnell auf Regelgrößenänderung reagierenden Gaskessel G1, G2 eignen sich aufgrund dieser spezifischen Eigenschaften besonders gut zum Bereitstellen einer Maximalenergieanforderung. Insbesondere wenn die von den Holzkesseln H1, H2 bereitgestellte Wärmemenge nicht ausreicht um eine maximale Wärmeanforderung zu erfüllen, werden die Gaskessel G1, G2 eingeschaltet, um die Anforderung zu erfüllen.

Die Steuereinrichtung S der Energieversorgungsanlage des siebten. Ausführungsbeispiels kann ferner eine Energieerzeugererfassungseinrichtung 14 aufweisen. Diese erfasst, welche Energieformen die Energieerzeuger G1, G2, B1, B2, H1, H2 jeweils bereitstellen können. Liegt eine durch eine Anforderungserfassungseinrichtung 10 erfasste Energiebereitstellungsanforderung EA zum gleichzeitigen Bereitstellen von Wärme und elektrischer Energie vor, so ermittelt die Energieerzeugererfassungseinrichtung 14, dass die BHKWs B1, B2 Wärme und elektrische Energie bereitstellen können und gibt diese Information an eine Sollwertbestimmungseinrichtung 11 der Steuereinrichtung S weiter. Die Sollwertbestimmungseinrichtung 11 ermittelt dann Sollwerte SW für die BHKWs B1, B2 zum Bereitstellen von Wärme und elektrischer Energie in Abhängigkeit der Energiebereitstellungsanforderung EA. Eine Sollwertausgabeeinrichtung 12 gibt die Sollwerte SW an die Regeleinrichtungen der BHKWs B1, B2 über eine geeignete Kommunikationsschnittstelle aus.

Figur 12 illustriert die Einteilung der Energieerzeuger des siebten Ausführungsbeispiels in Gruppen und Kaskaden. Außerdem wird ein beispielhafter Anlagenzustand angezeigt, bei dem die beiden Holzkessel H1, H2 der ersten Gruppe GR1 beide eingeschaltet sind und unter Volllast laufen. Die beiden BHKWs B1, B2 der zweiten Gruppe GR2 sind ausgeschaltet. Der erste Gaskessel G1 ist eingeschaltet und wird modulierend betrieben bei einer Last von 40% der Maximalleistung.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- V: Vorlauf
- R: Rücklauf
- S: Steuereinrichtung
- 10: Anforderungserfassungseinrichtung
- 11: Sollwertbestimmungseinrichtung
- 12: Sollwertausgabeeinrichtung
- 13: Anforderungserzeugungseinrichtung
- 14: Energieerzeugererfassungseinrichtung
- S1: erste Steuereinheit
- S2: zweite Steuereinheit
- S3: dritte Steuereinheit
- K: Koordiniereinheit
- P: Pufferspeicher
- R1: erste Regeleinrichtung
- R2: zweite Regeleinrichtung
- R3: dritte Regeleinrichtung
- R4: vierte Regeleinrichtung
- R5: fünfte Regeleinrichtung
- E1: erster Energieerzeuger
- E2: zweiter Energieerzeuger
- E3: dritter Energieerzeuger
- E4: vierter Energieerzeuger
- E5: fünfter Energieerzeuger
- G1: erster Gaskessel
- G2: zweiter Gaskessel
- 01: erster Ölkessel
- 02: zweiter Ölkessel
- B1: erstes BHKW
- B2: zweites BHKW
- H1: erster Holzkessel
- H2: zweiter Holzkessel
- GR1: erste Gruppe
- GR2: zweite Gruppe
- GR3: dritte Gruppe
- F1: erste Energieform (Wärme)
- F2: zweite Energieform (elektrische Energie)
- F3: dritte Energieform (Kälte)

## Patentansprüche

1. Verfahren zum Steuern einer multivalenten Energieversorgungsanlage, wobei die multivalente Energieversorgungsanlage mindestens umfasst:
- mindestens zwei Energieerzeuger (E1-E5, B1, B2, G1, G2, H1, H2, O1, O2, W1), die mindestens zwei verschiedene Energieträger nutzen, um Energie in Form von Wärme (F1) und/oder Kälte (F3) und/oder elektrischer Energie (F2) bereitzustellen, wobei ein erster Energieerzeuger (E1-E5, B1, B2, G1, G2, H1, H2, O1, O2, W1) gleichzeitig Wärme (F1) und elektrische Energie (F2) oder gleichzeitig Wärme (F1) und Kälte (F3) bereitstellen kann;
- je Energieerzeuger eine Regeleinrichtung (R1-R5) zum Regeln von Regelgrößen des Energieerzeugers (E1-E5, B1, B2, G1, G2, H1, H2, O1, O2, W1); und
- eine Steuereinrichtung (S) zum koordinierten Steuern der Regeleinrichtungen (R1-R5), wobei die Steuereinrichtung (S) die folgenden Verfahrensschritte ausführt:
∘ Erfassen einer Energiebereitstellungsanforderung (EA) zum gleichzeitigen Bereitstellen von Wärme (F1) und elektrischer Energie (F2) oder zum gleichzeitigen Bereitstellen von Wärme (F1) und Kälte (F3);
∘ Bestimmen von Sollwerten (SW) für den ersten Energieerzeuger (E1-E5, B1, B2, G1, G2, H1, H2, O1, O2, W1) zum gleichzeitigen Bereitstellen von Wärme (F1) und elektrischer Energie (F2) oder zum gleichzeitigen Bereitstellen von Wärme (F1) und Kälte (F3) in Abhängigkeit der Energiebereitstellungsanforderung (EA);
∘ Bestimmen von Sollwerten (SW) für die anderen Energieerzeuger (E1-E5, B1, B2, G1, G2, H1, H2, O1, O2, W1) zum Bereitstellen von Wärme (F1) und/oder Kälte (F3) und/oder elektrischer Energie (F2) in Abhängigkeit der Energiebereitstellungsanforderung (EA); und
∘ Ausgeben der Sollwerte (SW) an die Regeleinrichtungen (R1-R5).

2. Verfahren nach Anspruch 1, wobei die Steuereinrichtung (S) ferner eine Betriebsart aus einer vorbestimmten Menge von Betriebsarten erfasst, die Mindestwerte und/oder Maximalwerte für die mindestens eine Energiebereitstellungsanforderung (EA) festlegen, und das Bestimmen der Sollwerte (SW) für jeden Energieerzeuger (E1-E5, B1, B2, G1, G2, H1, H2, O1, O2, W1) in Abhängigkeit der erfassten Betriebsart erfolgt.

3. Verfahren nach Anspruch 1 oder 2, wobei die Steuereinrichtung (S) ferner eine Reihenfolge des Einschaltens und/oder Ausschaltens der Energieerzeuger (E1-E5, B1, B2, G1, G2, H1, H2, O1, O2, W1) erfasst und das Bestimmen der Sollwerte (SW) in Abhängigkeit der Reihenfolge erfolgt.

4. Verfahren nach einem der Ansprüche 1 bis 3, wobei mindestens ein Energieerzeuger (E1-E5, B1, B2, G1, G2, H1, H2, O1, O2, W1) zum Erfüllen einer Mindestenergieanforderung verwendet wird.

5. Verfahren nach einem der Ansprüche 1 bis 4, wobei mindestens ein Energieerzeuger (E1-E5, B1, B2, G1, G2, H1, H2, O1, O2, W1) zum Erfüllen einer Maximalenergieanforderung verwendet wird.

6. Verfahren nach einem der Ansprüche 1 bis 5, wobei die Steuereinrichtung (S) ferner die folgenden Schritte ausführt:
- Erfassen, von jeder der Regeleinrichtungen (R1-R5), von Restriktionen bezüglich der Regelgrößen des jeweiligen Energieerzeugers (E1-E5, B1, B2, G1, G2, H1, H2, O1, 02, W1), wobei die Restriktionen Minimal- und/oder Maximalwerte einer durch den Energieerzeuger (E1-E5, B1, B2, G1, G2, H1, H2, O1, O2, W1) bereitgestellten Leistung betreffen und/oder angeben, ob der betreffende Energieerzeuger (E1-E5, B1, B2, G1, G2, H1, H2, O1, O2, W1) eingeschaltet oder ausgeschaltet sein muss;
- Erfassen, von jeder der Regeleinrichtungen (R1-R5), von spezifischen Eigenschaften hinsichtlich einer Leistungsabgabe des jeweiligen Energieerzeugers (E1-E5, B1, B2, G1, G2, H1, H2, O1, O2, W1), die angeben wie ein Energieerzeuger (E1-E5, B1, B2, G1, G2, H1, H2, O1, O2, W1) auf eine Regelgrößenänderung reagiert;
- Bestimmen einer Reihenfolge des Einschaltens und/oder Ausschaltens der Energieerzeuger (E1-E5, B1, B2, G1, G2, H1, H2, O1, O2, W1) in Abhängigkeit der Restriktionen und/oder der spezifischen Eigenschaften der Energieerzeuger (E1-E5, B1, B2, G1, G2, H1, H2, O1, O2, W1);
- Bestimmen von -Sollwerten für jeden Energieerzeuger (E1-E5, B1, B2, G1, G2, H1, H2, O1, O2, W1) zum Erfüllen der mindestens einen Energiebereitstellungsanforderung (EA) in Abhängigkeit der Reihenfolge des Einschaltens und/oder Ausschaltens.

7. Steuereinrichtung (S) zum Steuern einer multivalenten Energieversorgungsanlage, wobei die multivalente Energieversorgungsanlage mindestens umfasst:
- mindestens zwei Energieerzeuger (E1-E5, B1, B2, G1, G2, H1, H2, O1, O2, W1), die mindestens zwei verschiedene Energieträger nutzen, um Energie in Form von Wärme (F1) und/oder Kälte (F3) und/oder elektrischer Energie (F2) bereitzustellen, wobei ein erster Energieerzeuger (E1-E5, B1, B2, G1, G2, H1, H2, O1, O2, W1) gleichzeitig Wärme (F1) und elektrische Energie (F2) oder gleichzeitig Wärme (F1) und Kälte (F3) bereitstellen kann; und
- je Energieerzeuger (E1-E5, B1, B2, G1, G2, H1, H2, O1, O2, W1) eine Regeleinrichtung (R1-R5) zum Regeln von Regelgrößen des Energieerzeugers;
- wobei die Steuereinrichtung (S) umfasst:
∘ eine Anforderungserfassungseinrichtung (10) zum Erfassen einer Energiebereitstellungsanforderung (EA) zum gleichzeitigen Bereitstellen von Wärme (F1) und elektrischer Energie (F2) oder zum gleichzeitigen Bereitstellen von Wärme (F1) und Kälte (F3);
∘ eine Sollwertbestimmungseinrichtung (11) zum Bestimmen von Sollwerten (SW) für den ersten Energieerzeuger (E1-E5, B1, B2, G1, G2, H1, H2, O1, O2, W1) zum gleichzeitigen Bereitstellen von Wärme (F1) und elektrischer Energie (F2) oder zum gleichzeitigen Bereitstellen von Wärme (F1) und Kälte (F3) in Abhängigkeit der Energiebereitstellungsanforderung (EA) und zum Bestimmen von Sollwerten (SW) für die anderen Energieerzeuger (E1-E5, B1, B2, G1, G2, H1, H2, O1, O2, W1) zum Bereitstellen von Wärme (F1) und/oder Kälte (F3) und/oder elektrischer Energie (F2) in Abhängigkeit der Energiebereitstellungsanforderung (EA); und
∘ eine Sollwertausgabeeinrichtung (12) zum Ausgeben der Sollwerte (SW) an die Regeleinrichtungen (R1-R5).

8. Steuereinrichtung (S) nach Anspruch 7, wobei die Steuereinrichtung (S) eine Anforderungserzeugungseinrichtung (13) zum Erzeugen mindestens einer Energiebereitstellungsanforderung (EA) für jeweils mindestens eine Energieform Wärme (F1) und/oder Kälte (F3) und/oder elektrische Energie (F2) umfasst.

9. Steuereinrichtung (S) nach Anspruch 7 oder 8, wobei die Steuereinrichtung (S) ferner eine Energieerzeugererfassungseinrichtung (14) zum Erfassen der Energieerzeuger (E1-E5, B1, B2, G1, G2, H1, H2, O1, O2, W1) in der multivalenten Energieversorgungsanlage umfasst, wobei die Energieerzeugererfassungseinrichtung (14) ist dafür ausgelegt ist, zu erfassen, welche Energieform(en) (F1-F3) die Energieerzeuger (E1-E5, B1, B2, G1, G2, H1, H2, O1, O2, W1) jeweils bereitstellen, und welche(n) Energieträger die Energieerzeuger (E1-E5, B1, B2, G1, G2, H1, H2, O1, O2, W1) jeweils nutzen.

## Claims

1. A method of controlling a multivalent energy supply system, wherein the multivalent energy supply system comprises at least:
- at least two energy generators (E1-E5, B1, B2, G1, G2, H1, H2, O1, O2, W1) which use at least two different energy carriers in order to provide energy in the form of heat (F1) and/or cold (F3 ) and/or electrical energy (F2), wherein a first energy generator (E1-E5, B1, B2, G1, G2, H1, H2, O1, O2, W1) can either simultaneously provide heat (F1) and electrical energy (F2) or simultaneously provide heat (F1) and cold (F3);
- for each energy generator, a closed-loop controller (R1-R5) for controlling controlled variables of the energy generator (E1-E5, B1, B2, G1, G2, H1, H2, O1, O2, W1); and
- a control device (S) for coordinately controlling the closed-loop controllers (R1-R5), wherein the control device (S) carries out the following method steps:
∘ detecting an energy supply request (EA) for simultaneously providing heat (F1) and electrical energy (F2) or for simultaneously providing heat (F1) and cold (F3);
∘ determining target values (SW) for the first energy generator (E1-E5, B1, B2, G1, G2, H1, H2, O1, O2, W1) for simultaneously providing heat (F1) and electrical energy (F2) or for simultaneously providing heat (F1) and cold (F3) based on the energy supply request (EA);
∘ determining target values (SW) for the other energy generators (E1-E5, B1, B2, G1, G2, H1, H2, O1, O2, W1) for providing heat (F1) and/or cold (F3) and/or electrical energy (F2) based on the energy supply request (EA); and
∘ outputting the target values (SW) to the closed-loop controllers (R1-R5).

2. The method of claim 1, wherein the control device (S) further detects an operation mode from a predetermined set of operation modes which define minimum values and/or maximum values for the at least one energy supply request (EA), and wherein determining the target values (SW) for each energy generator (E1-E5, B1, B2, G1, G2, H1, H2, O1, O2, W1) is performed depending on the detected operation mode.

3. The method of claim 1 or 2, wherein the control device (S) further detects an order of switching on and/or off the energy generators (E1-E5, B1, B2, G1, G2, H1, H2, O1, O2, W1), and wherein determining the target values (SW) is performed depending on the order.

4. The method according to any one of claims 1 to 3, wherein at least one energy generator (E1-E5, B1, B2, G1, G2, H1, H2, O1, O2, W1) is used to meet a minimum energy request.

5. The method according to any one of claims 1 to 4, wherein at least one energy generator (E1-E5, B1, B2, G1, G2, H1, H2, O1, O2, W1) is used to meet a maximum energy request.

6. The method according to any one of claims 1 to 5, wherein the control device (S) further carries out the following steps:
- detecting, from each of the closed-loop controllers (R1-R5), restrictions on the controlled variables of the respective energy generator (E1-E5, B1, B2, G1, G2, H1, H2, O1, O2, W1), wherein the restrictions specify minimum and/or maximum values of a power provided by the energy generator (E1-E5, B1, B2, G1, G2, H1, H2, O1, O2, W1) and/or indicate whether the respective energy generator (E1-E5, B1, B2, G1, G2, H1, H2, O1, O2, W1) must be switched on or off;
- detecting, from each of the closed-loop controllers (R1-R5), specific characteristics regarding a power output of the respective energy generator (E1-E5, B1, B2, G1, G2, H1, H2, O1, O2, W1) which indicate how an energy generator (E1-E5, B1, B2, G1, G2, H1, H2, O1, O2, W1) reacts to a change in the controlled variables;
- determining an order of switching on and/or switching off the energy generators (E1-E5, B1, B2, G1, G2, H1, H2, O1, O2, W1) depending on the restrictions and/or the specific characteristics of the energy generators (E1- E5, B1, B2, G1, G2, H1, H2, O1, O2, W1);
- determining target values for each energy generator (E1-E5, B1, B2, G1, G2, H1, H2, O1, O2, W1) for meeting the at least one energy supply request (EA) based on the order of switching on and/or switching off.

7. A control device (S) for controlling a multivalent energy supply system, wherein the multivalent energy supply system comprises at least:
- at least two energy generators (E1-E5, B1, B2, G1, G2, H1, H2, O1, O2, W1) which use at least two different energy carriers in order to provide energy in the form of heat (F1) and/or cold (F3) and/or electrical energy (F2), wherein a first energy generator (E1-E5, B1, B2, G1, G2, H1, H2, O1, O2, W1) can either simultaneously provide heat (F1) and electrical energy (F2) or simultaneously provide heat (F1) and cold (F3); and
- for each energy generator (E1-E5, B1, B2, G1, G2, H1, H2, O1, O2, W1), a closed-loop controller (R1-R5) for controlling controlled variables of the energy generator;
- wherein the control device (S) comprises:
∘ a request detection device (10) for detecting an energy supply request (EA) for simultaneously providing heat (F1) and electrical energy (F2) or for simultaneously providing heat (F1) and cold (F3);
∘ a target value determination device (11) for determining target values (SW) for the first energy generator (E1-E5, B1, B2, G1, G2, H1, H2, O1, O2, W1) for simultaneously providing heat (F1) and electrical energy (F2) or for simultaneously providing heat (F1) and cold (F3) based on the energy supply request (EA), and for determining target values (SW) for the other energy generators (E1-E5, B1, B2, G1, G2, H1, H2, O1, O2, W1) for providing heat (F1) and/or cold (F3) and/or electrical energy (F2) based on the energy supply request (EA); and
∘ a target value output device (12) for outputting the target values (SW) to the closed-loop controllers (R1-R5).

8. The control device (S) according to claim 7, wherein the control device (S) comprises a request generation device (13) for generating at least one energy supply request (EA) for at least one energy form of heat (F1) and/or cold (F3) and/or electrical energy (F2).

9. The control device (S) according to claim 7 or 8, wherein the control device (S) further comprises an energy generator detection device (14) for detecting the energy generators (E1-E5, B1, B2, G1, G2, H1, H2, O1, O2, W1) in the multivalent energy supply system, wherein the energy generator detection device (14) is configured to detect which energy form(s) (F1-F3) the energy generators (E1-E5, B1, B2, G1, G2, H1, H2, O1, O2, W1) provide, respectively, and which energy carriers are used by the energy generators (E1-E5, B1, B2, G1, G2, H1, H2, O1, O2, W1), respectively.

## Revendications

1. Procédé pour commander une installation d'alimentation en énergie multivalente, dans lequel l'installation d'alimentation en énergie multivalente comprend au moins :
- au moins deux générateurs d'énergie (E1-E5, B1, B2, G1, G2, H1, H2, O1, O2, W1), qui utilisent au moins deux sources d'énergie différentes, pour fournir de l'énergie sous forme de chaleur (F1) et/ou de froid (F3) et/ou d'énergie électrique (F2), dans lequel un premier générateur d'énergie (E1-E5, B1, B2, G1, G2, H1, H2, O1, O2, W1) peut fournir simultanément de la chaleur (F1) et de l'énergie électrique (F2) ou simultanément de la chaleur (F1) et du froid (F3) ;
- par générateur d'énergie, un dispositif de régulation (R1-R5) pour réguler des grandeurs de régulation du générateur d'énergie (E1-E5, B1, B2, G1, G2, H1, H2, O1, O2, W1) ; et
- un dispositif de commande (S) pour commander de manière coordonnée les dispositifs de régulation (R1-R5), dans lequel le dispositif de commande (S) exécute les étapes de procédé suivantes :
∘ la détection d'une demande de fourniture d'énergie (EA) pour fournir simultanément de la chaleur (F1) et de l'énergie électrique (F2) ou pour fournir simultanément de la chaleur (F1) et du froid (F3) ;
∘ la détermination de valeurs théoriques (SW) pour le premier générateur d'énergie (E1-E5, B1, B2, G1, G2, H1, H2, O1, O2, W1) pour fournir simultanément de la chaleur (W1) et de l'énergie électrique (F2) ou pour fournir simultanément de la chaleur (F1) et du froid (F3) en fonction de la demande de fourniture d'énergie (EA) ;
∘ la détermination de valeurs théoriques (SW) pour les autres générateurs d'énergie (E1-E5, B1, B2, G1, G2, H1, H2, O1, O2, W1) pour fournir de la chaleur (F1) et/ou du froid (F3) et/ou de l'énergie électrique (F2) en fonction de la demande de fourniture d'énergie (EA) ; et
∘ la distribution des valeurs théoriques (SW) aux dispositifs de régulation (R1-R5).

2. Procédé selon la revendication 1, dans lequel le dispositif de commande (S) détecte en outre un mode de fonctionnement à partir d'une quantité prédéfinie de modes de fonctionnement, qui définissent des valeurs minimales et/ou valeurs maximales pour l'au moins une demande de fourniture d'énergie (EA), et la détermination des valeurs théoriques (SW) s'effectue pour chaque générateur d'énergie (E1-E5, B1, B2, G1, G2, H1, H2, O1, O2, W1) en fonction du mode de fonctionnement détecté.

3. Procédé selon la revendication 1 ou 2, dans lequel le dispositif de commande (S) détecte en outre un ordre d'activation et/ou de désactivation des générateurs d'énergie (E1-E5, B1, B2, G1, G2, H1, H2, O1, O2, W1) et la détermination des valeurs théoriques (SW) s'effectue en fonction de l'ordre.

4. Procédé selon l'une quelconque des revendications 1 à 3, dans lequel au moins un générateur d'énergie (E1-E5, B1, B2, G1, G2, H1, H2, O1, O2, W1) est utilisé pour satisfaire à une demande d'énergie minimale.

5. Procédé selon l'une quelconque des revendications 1 à 4, dans lequel au moins un générateur d'énergie (E1-E5, B1, B2, G1, G2, H1, H2, O1, O2, W1) est utilisé pour satisfaire à une demande d'énergie maximale.

6. Procédé selon l'une quelconque des revendications 1 à 5, dans lequel le dispositif de commande (S) exécute en outre les étapes suivantes :
- la détection, par chacun des dispositifs de régulation (R1-R5), de restrictions en ce qui concerne les grandeurs de régulation du générateur d'énergie (E1-E5, B1, B2, G1, G2, H1, H2, O1, O2, W1) respectif, dans lequel les restrictions concernent des valeurs minimales et/ou maximales d'une puissance fournie par le générateur d'énergie (E1-E5, B1, B2, G1, G2, H1, H2, O1, O2, W1) et/ou indiquent si le générateur d'énergie (E1-E5, B1, B2, G1, G2, H1, H2, O1, O2, W1) concerné doit être activé ou désactivé ;
- la détection, par chacun des dispositifs de régulation (R1-R5), de propriétés spécifiques quant à une distribution de puissance du générateur d'énergie (E1-E5, B1, B2, G1, G2, H1, H2, O1, O2, W1) respectif, qui indiquent la façon dont un générateur d'énergie (E1-E5, B1, B2, G1, G2, H1, H2, O1, O2, W1) réagit à une modification de grandeur de régulation ;
- la détermination d'un ordre d'activation et/ou de désactivation des générateurs d'énergie (E1-E5, B1, B2, G1, G2, H1, H2, O1, O2, W1) en fonction des restrictions et/ou des propriétés spécifiques des générateurs d'énergie (E1-E5, B1, B2, G1, G2, H1, H2, O1, O2, W1) ;
- la détermination de valeurs théoriques pour chaque générateur d'énergie (E1-E5, B1, B2, G1, G2, H1, H2, O1, O2, W1) pour satisfaire à l'au moins une demande de fourniture d'énergie (EA) en fonction de l'ordre d'activation et/ou de désactivation.

7. Dispositif de commande (S) pour commander une installation d'alimentation en énergie multivalente, dans lequel l'installation d'alimentation en énergie multivalente comprend au moins :
- au moins deux générateurs d'énergie (E1-E5, B1, B2, G1, G2, H1, H2, O1, O2, W1), qui utilisent au moins deux sources d'énergie différentes, pour fournir de l'énergie sous forme de chaleur (F1) et/ou de froid (F3) et/ou d'énergie électrique (F2), dans lequel un premier générateur d'énergie (E1-E5, B1, B2, G1, G2, H1, H2, O1, O2, W1) peut fournir simultanément de la chaleur (F1) et de l'énergie électrique (F2) ou simultanément de la chaleur (F1) et du froid (F3) ; et
- par générateur d'énergie (E1-E5, B1, B2, G1, G2, H1, H2, O1, O2, W1), un dispositif de régulation (R1-R5) pour réguler des grandeurs de régulation du générateur d'énergie ;
- dans lequel le dispositif de commande (S) comprend :
∘ un dispositif de détection de demande (10) pour détecter une demande de fourniture d'énergie (EA) pour fournir simultanément de la chaleur (F1) et de l'énergie électrique (F2) ou pour fournir simultanément de la chaleur (F1) et du froid (F3) ;
∘ un dispositif de détermination de valeur théorique (11) pour déterminer des valeurs théoriques (SW) pour le premier générateur d'énergie (E1-E5, B1, B2, G1, G2, H1, H2, O1, O2, W1) pour fournir simultanément de la chaleur (F1) et de l'énergie électrique (F2) ou pour fournir simultanément de la chaleur (F1) et du froid (F3) en fonction de la demande de fourniture d'énergie (EA) et pour déterminer des valeurs théoriques (SW) pour les autres générateurs d'énergie (E1-E5, B1, B2, G1, G2, H1, H2, O1, O2, W1) pour fournir de la chaleur (F1) et/ou du froid (F3) et/ou de l'énergie électrique (F2) en fonction de la demande de fourniture d'énergie (EA) ; et
∘ un dispositif de distribution de valeur théorique (12) pour distribuer les valeurs théoriques (SW) aux dispositifs de régulation (R1-R5).

8. Dispositif de commande (S) selon la revendication 7, dans lequel le dispositif de commande (S) comprend un dispositif de génération de demande (13) pour générer au moins une demande de fourniture d'énergie (EA) pour respectivement au moins une forme d'énergie chaleur (F1) et/ou froid (F3) et/ou énergie électrique (F2).

9. Dispositif de commande (S) selon la revendication 7 ou 8, dans lequel le dispositif de commande (S) comprend en outre un dispositif de détection de générateur d'énergie (14) pour détecter les générateurs d'énergie (E1-E5, B1, B2, G1, G2, H1, H2, O1, O2, W1) dans l'installation d'alimentation en énergie multivalente, dans lequel le dispositif de détection de générateur d'énergie (14) est conçu pour détecter quelle(s) forme(s) d'énergie (F1-F3) les générateurs d'énergie (E1-E5, B1, B2, G1, G2, H1, H2, O1, O2, W1) fournissent respectivement, et quelle(s) source(s) d'énergie les générateurs d'énergie (E1-E5, B1, B2, G1, G2, H1, H2, O1, O2, W1) utilisent respectivement.
